(19) Europäisches Patentamt
European Patent Office
Office européen des brevets

(11) **EP 2 812 655 B1**

(12) **EUROPÄISCHE PATENTSCHRIFT**

(45) Veröffentlichungstag und Bekanntmachung des Hinweises auf die Patenterteilung:
**06.04.2016   Patentblatt 2016/14**

(21) Anmeldenummer: **13701606.9**

(22) Anmeldetag: **22.01.2013**

(51) Int Cl.:
*G01D 5/244* (2006.01)        *G03F 7/20* (2006.01)
*G12B 5/00* (2006.01)        *H02K 41/03* (2006.01)

(86) Internationale Anmeldenummer:
**PCT/EP2013/051127**

(87) Internationale Veröffentlichungsnummer:
**WO 2013/117422 (15.08.2013 Gazette 2013/33)**

(54) **PLANARANTRIEB UND VERFAHREN ZU DESSEN KALIBRIERUNG**

PLANAR MOTOR DRIVE AND METHOD FOR ITS CALIBRATION

ENTRAÎNEMENT PLANAIRE ET PROCÉDÉ POUR LE CALIBRER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2012   DE 102012201930**

(43) Veröffentlichungstag der Anmeldung:
**17.12.2014   Patentblatt 2014/51**

(73) Patentinhaber: **Schaeffler Technologies AG & Co. KG**
**91074 Herzogenaurach (DE)**

(72) Erfinder: **KEGELER, Jörg**
**98553 Schleusingen (DE)**

(56) Entgegenhaltungen:
**CN-Y- 201 378 823        JP-A- 2010 175 473**
**JP-A- 2011 193 620        US-A1- 2007 035 267**
**US-A1- 2008 275 661**

EP 2 812 655 B1

**Beschreibung**

Die vorliegende Erfindung betrifft ein Verfahren zur Kalibrierung eines Planarantriebes, beispielsweise zur Kalibrierung eines Planarmotors oder zur Kalibrierung eines Portalantriebes. Im Weiteren betrifft die Erfindung einen Planarantrieb, welcher für die erfindungsgemäße Kalibrierung konfiguriert ist.

Die DE 103 29 931 A1 zeigt einen planaren Direktantrieb mit einem Positionsmesssystem. Der planare Direktantrieb umfasst eine Passiveinheit, eine Aktiveinheit, eine Lagereinheit und ein Positionsmesssystem. Das Positionsmesssystem umfasst einen die Maßverkörperung abtastenden und ein Positionssignal liefernden Messsensor. Das Positionsmesssystem besteht aus einer bewegten Komponenten und einer quasistationären Komponenten, von denen die eine durch die Maßverkörperung und die andere durch den Messsensor gebildet ist. Beide Komponenten sind außerhalb des Lagerspalts und beabstandet zur Lauffläche angeordnet.

Die DE 10 2006 024 150 A1 zeigt einen planaren Direktantrieb mit verbesserter Positionsbestimmung. Der planare Direktantrieb umfasst eine planare Passiveinheit mit magnetisierbaren Zähnen, wobei sowohl die Grundfläche der magnetisierbaren Zähne als auch deren Zahnlücken zumindest in einer ersten Richtung y eine konstante Länge I aufweisen. Weiterhin umfasst der Direktantrieb eine Aktiveinheit mit Spulen zur Erzeugung eines veränderlichen Magnetflusses und mit einer Sensoreinheit zur Positionsbestimmung der Aktiveinheit. Die Sensoreinheit weist mindestens eine Magnetfeldquelle auf, deren Magnetfeld zumindest teilweise durch die magnetisierbaren Zähne der Passiveinheit verläuft. Zwei Sensoren dienen der Erfassung positionsabhängiger Änderungen des durch die Magnetfeldquelle bereitgestellten Magnetfeldes.

Aus der WO 2011/064317 A2 ist ein Kalibrierverfahren für eine Winkelmesseinrichtung bekannt, bei welchem Winkelpositionswerte von mehreren Leseköpfen erfasst werden, die unterschiedliche Winkelstellungen gegenüber einem Codeträger einnehmen können. Es wird ein Winkelfehler bestimmt, indem die Differenzen der Winkelpositionswerte der Leseköpfe mit der bekannten Winkellage der Leseköpfe zueinander verglichen werden. Dies wird für variierende Winkelstellungen wiederholt. Aus den ermittelten Winkelfehlern lassen sich Parameter für die Kalibrierung der Winkelmesseinrichtung bestimmen, ohne dass es hierfür einer Referenz bedarf.

Die US 2008/0275661 A1 zeigt ein Verfahren zur Detektion und Kompensation von Kraftwelligkeiten und Seitenkräften, welche bei elektromagnetischen Antrieben eines Planarmotors entstehen können. Die Kraftwelligkeiten sind dabei periodische Änderungen der Kraftabgabe des Läufers in Verfahrrichtung, und die Seitenkräfte sind periodische Änderungen der Kraftabgabe des Läufers senkrecht zur Verfahrrichtung. Diese Kräfte führen dazu, dass die Positionierung des Läufers des Planarmotors nicht die gewünschte Genauigkeit aufweist.

Die JP 2011-193620 A zeigt einen Planarmotor, welcher einen Läufer mit einem Weggeber umfasst. Der Läufer des Planarmotors verfährt in x- und in y-Richtung und kann auch einen Drehwinkel um die z-Achse aufweisen. Der Weggeber besteht aus einem Kopfteil, welches am Läufer angebracht ist, und aus einer Skala, die in die Richtungen x und y verläuft. Der Weggeber wird genutzt, um den Läufer des Planarmotors an eine bestimmte Position zu verfahren. Durch eine besondere Anordnung der Skalenfront soll der Fehler bei der Positionierung klein gehalten werden.

Die Aufgabe der vorliegenden Erfindung besteht ausgehend vom Stand der Technik darin, die mit einem Planarantrieb erzielbare Genauigkeit signifikant zu erhöhen, ohne dass hierfür veränderte Antriebe oder veränderte Sensoren erforderlich sind.

Die genannte Aufgabe wird gelöst durch ein Verfahren zur Kalibrierung eines Planarantriebes gemäß dem beigefügten Anspruch 1 und durch einen Planarantrieb gemäß dem beigefügten nebengeordneten Anspruch 10.

Das erfindungsgemäße Verfahren dient der Kalibrierung eines Planarantriebes, woraufhin das Anfahren von vorgegebenen Positionen mit einer erhöhten Genauigkeit erfolgen kann. Das erfindungsgemäße Verfahren dient insbesondere der Kalibrierung solcher Planarantriebe, die einen bevorzugt planen Stator und einen gegenüber dem Stator in eine x-Richtung und in eine y-Richtung verfahrbaren Läufer umfassen. Die x-Richtung und die y-Richtung sind bevorzugt senkrecht zueinander ausgerichtet und können beispielsweise jeweils eine horizontale Richtung oder eine vertikale Richtung darstellen. Die x-Richtung und die y-Richtung spannen eine Bewegungsebene des Läufers auf, welche bevorzugt parallel zum Stator angeordnet ist. Der Läufer kann in der Bewegungsebene verfahren werden und dort verschiedene Positionen einnehmen, welche sich in der x-Richtung und/oder in der y-Richtung voneinander unterscheiden. Der Planarantrieb kann beispielsweise durch einen Planarmotor oder durch ein x-y-Portal gebildet sein.

Der Planarantrieb umfasst weiterhin einen ersten auf dem Läufer angeordneten x-Antrieb zum Antreiben des Läufers in die x-Richtung. Eine erste x-Ansteuereinheit des Planarantriebes dient zum Ansteuern des ersten x-Antriebes. Die erste x-Ansteuereinheit kann als Regelung oder als Steuerung ausgebildet sein. Weiterhin umfasst der Planarantrieb einen zweiten x-Antrieb zum Antreiben des Läufers in die x-Richtung. Der zweite x-Antrieb ist ebenfalls auf dem Läufer angeordnet, jedoch gegenüber dem ersten x-Antrieb in der y-Richtung versetzt. Der Läufer kann somit entweder über den ersten x-Antrieb oder über den zweiten x-Antrieb oder über beide x-Antriebe in die x-Richtung angetrieben werden. Eine zweite x-Ansteuereinheit des Planarantriebes dient dem Ansteuern des zweiten x-Antriebes. Die zweite x-Ansteuereinheit kann als Regelung oder als Steuerung ausgebildet sein Der Planarantrieb kann auch weitere auf dem Läufer angeordnete x-Antriebe umfassen.

Weiterhin umfasst der Planarantrieb mindestens einen y-Antrieb zum Antreiben des Läufers in die y-Richtung. Der erste x-Antrieb, der zweite x-Antrieb und der mindestens eine y-Antrieb sind bevorzugt jeweils durch einen Elektromagneten gebildet, welcher mit magnetisierbaren Kraftübertragungselementen des Stators zusammenwirkt. Der Planarantrieb umfasst weiterhin einen y-Sensor zur Bestimmung der Position des Läufers gegenüber dem Stator in der y-Richtung. Mithilfe des y-Sensors kann die y-Komponente der Position des Läufers gegenüber dem Stator gemessen werden. Der y-Sensor ist in der Bewegungsebene in der x-Richtung beabstandet zum y-Antrieb auf dem Läufer angeordnet. Dabei ist der y-Sensor bevorzugt auch in der y-Richtung zum y-Antrieb beabstandet. Bevorzugt umfasst der Planarantrieb eine den y-Sensor umfassende y-Ansteuereinheit zum Ansteuern des y-Antriebes. Die y-Ansteuereinheit kann als Regelung oder als Steuerung ausgebildet sein.

Das erfindungsgemäße Verfahren umfasst zunächst einen Schritt, bei welchem der erste x-Antrieb über die erste x-Ansteuereinheit zum Verfahren des Läufers in die x-Richtung angesteuert wird und gleichzeitig der zweite x-Antrieb über die zweite x-Ansteuereinheit ebenfalls zum Verfahren des Läufers in die x-Richtung angesteuert wird. Dabei werden der erste x-Antrieb und der zweite x-Antrieb örtlich synchron, aber mit einem ersten Versatz in der x-Richtung angesteuert. Die örtliche Synchronität unter Einhaltung des ersten Versatzes ist dann gegeben, wenn der erste x-Antrieb und der zweite x-Antrieb zumindest zu bestimmten Zeitpunkten zu Orten angesteuert sind, die in der x-Richtung den ersten Versatz aufweisen. Die durch den ersten x-Antrieb und den zweiten x-Antrieb tatsächlich erreichten Orte können wegen der noch fehlenden Kalibrierung von den angesteuerten Orten abweichen. Der erste x-Antrieb und der zweite x-Antrieb können auch permanent mit dem ersten Versatz synchron angesteuert werden. Der erste Versatz führt dazu, dass der Läufer während des Verfahrens gedreht ist, nämlich in einer senkrecht zur Bewegungsebene angeordneten Drehachse. Der Läufer ist dabei um einen ersten Drehwinkel gedreht, der jedoch wegen der noch fehlenden Kalibrierung der ersten x-Ansteuereinheit und der zweiten x-Ansteuereinheit einen verbleibenden Drehwinkelfehler aufweist, der von der Position des Läufers in der x-Richtung abhängig ist. Infolge des variierenden Drehwinkelfehlers variiert auch eine Auslenkung des y-Sensors in der y-Richtung. Diese variierende Auslenkung ist mithilfe des y-Sensors messbar. Daher wird ein erstes Signal des y-Sensors in Abhängigkeit von der Position des Läufers in der x-Richtung aufgezeichnet, während der Läufer in die x-Richtung verfahren wird, insbesondere in den Zeitpunkten, wenn der erste x-Antrieb und der zweite x-Antrieb zu Orten angesteuert sind, die in der x-Richtung den ersten Versatz aufweisen. Zwar wird der Läufer infolge des ersten Versatzes der beiden x-Antriebe in die y-Richtung ausgelenkt, jedoch unterbleibt bei bevorzugten Ausführungsformen ein Verfahren des Läufers in die y-Richtung durch ein Ansteuern des y-Antriebes über die y-Ansteuereinheit. Dies kann bevorzugt dadurch erfolgen, dass der y-Antrieb von der y-Ansteuereinheit ein statisches Signal erhält, welche den y-Antrieb an der eingenommenen Position des y-Antriebes fixiert. Dabei ist eine Drehung des Läufers über die beiden x-Antriebe dennoch nicht verhindert, da der y-Antrieb in diesem Fall einen Drehpunkt bildet, sodass jedenfalls bezogen auf die Position des y-Sensors eine Auslenkung in der y-Richtung erfolgen kann.

In einem weiteren Schritt des erfindungsgemäßen Verfahrens erfolgt ein Kalibrieren der ersten x-Ansteuereinheit und der zweiten x-Ansteuereinheit in einem ersten Kalibrierungsschritt durch ein Bewerten einer in der ersten x-Ansteuer-einheit zu verarbeitenden Größe und einer in der zweiten x-Ansteuereinheit zu verarbeitenden Größe mit dem ersten Signal des y-Sensors. Bei den genannten Größen handelt es sich um die Ansteuerung der x-Antriebe beeinflussende Größen, welche von x abhängig sind, beispielsweise ein aufbereitetes Signal eines der jeweiligen x-Ansteuereinheit zugeordneten Sensors zur Bestimmung einer Position in der x-Richtung, welches zur Regelung der Position des Läufers in die x-Richtung verwendet wird. Bei den die Ansteuerung beeinflussenden Größen kann es sich aber auch um ein Steuerungssignal zum Ansteuern des jeweiligen x-Antriebes handeln. Das Bewerten der in der ersten x-Ansteuereinheit zu verarbeitenden Größe und der in der zweiten x-Ansteuereinheit zu verarbeitenden Größe erfolgt mit dem Ziel, den verbleibenden Drehwinkelfehler des ersten Drehwinkels beim Verfahren des Läufers in die x-Richtung auszugleichen. Hierfür können die in der ersten x-Ansteuereinheit zu verarbeitende Größe und die in der zweiten x-Ansteuereinheit zu verarbeitende Größe in gleichem Maße mit dem ersten Signal des y-Sensors bewertet werden. Diese Bewertung erfolgt bevorzugt im Frequenzraum des ersten Signals des y-Sensors, wofür das erste Signal des y-Sensors bezogen auf eine in der x-Richtung ausgebildete Ortsfrequenz der x-Antriebe frequenzanalysiert wird, d. h. in den Frequenzraum transformiert wird und ein Koeffizient und ein Phasenwinkel einer ersten gewählten Harmonischen der Ortsfrequenz bestimmt werden. Die beiden in den x-Ansteuereinheiten zu verarbeitenden Größen werden in gleichem Maße durch den Koeffizienten und den Phasenwinkel der ersten gewählten Harmonischen des ersten Signals des y-Sensors bewertet. Dabei bestimmen der Koeffizient und der Phasenwinkel der ersten gewählten Harmonischen des ersten Signals des y-Sensors einen Korrekturwert, der von der in der ersten x-Ansteuereinheit zu verarbeitenden Größe und von der in der zweiten x-Ansteuereinheit zu verarbeitenden Größe in gleichem Maße abgezogen wird. Diese bevorzugte Ausführung des Bewertens kann beispielsweise durch die folgenden Formeln beschrieben werden:

$$X1_{bewertet\ 1.\ Schritt} = X1 - K_1(x^*_1)$$

$$X2_{bewertet\ 1.\ Schritt} = X2 - K_1(x^*_2)$$

X1 steht für die in der ersten x-Ansteuereinheit zu verarbeitende Größe. X2 steht für die in der zweiten x-Ansteuereinheit zu verarbeitenden Größe. $X1_{bewertet\ 1.\ Schritt}$ steht für die in der ersten x-Ansteuereinheit zu verarbeitende Größe, die im ersten Kalibrierungsschritt bewertet wurde. $X2_{bewertet\ 1.\ Schritt}$ steht für die in der zweiten x-Ansteuereinheit zu verarbeitende Größe, die im ersten Kalibrierungsschritt bewertet wurde. $K_1$ ist der für den ersten Kalibrierungsschritt zu verwendende Korrekturwert, der sich auf der Grundlage des Koeffizienten und des Phasenwinkels der ersten gewählten Harmonischen des ersten Signals des y-Sensors berechnet. $K_1$ ist von x abhängig. Der fehlerfreie Wert für x ist aber noch nicht bekannt. Stattdessen sind X1 und X2 bekannt, die beispielsweise Steuer- oder Messgrößen darstellen und zumindest eine fehlerbehaftete Bestimmung von x ermöglichen. Dabei ist $x^*_1$ der mittels $X_1$ bestimmte x-Wert und $x^*_2$ der mittels $X_2$ bestimmte x-Wert. In einem einfachen Fall sind $x^*_1 = X_1$ und $x^*_2 = X_2$.

Der für den ersten Kalibrierungsschritt zu verwendende Korrekturwert berechnet sich bevorzugt nach der folgenden Formel:

$$K_1 = A_1 \cdot \cos(x - Z_1)$$

$A_1$ steht für den Koeffizienten der ersten gewählten Harmonischen des ersten Signals des y-Sensors. $Z_1$ steht für den Phasenwinkel der ersten gewählten Harmonischen des ersten Signals des y-Sensors. Der Wert für x kann durch $x^*_1$ und/oder $x^*_2$ repräsentiert sein.

Bei der ersten gewählten Harmonischen der Ortsfrequenz handelt es sich bevorzugt um die Harmonische 1. Ordnung, nämlich die einfache Ortsfrequenz, für welche auch die Schreibweise 1. Harmonische üblich ist. Die oben angegebene Formel für $K_1$ setzt voraus, dass es sich bei der ersten gewählten Harmonischen der Ortsfrequenz um die Harmonische 1. Ordnung handelt. Bei der ersten gewählten Harmonischen der Ortsfrequenz kann es sich aber auch um eine Harmonische einer anderen Ordnung, z. B. 4. oder 7. Ordnung handeln.

Ein besonderer Vorteil des erfindungsgemäßen Verfahrens besteht darin, dass die mit vorhandenen Antrieben und Sensoren erzielbare Genauigkeit um eine Größenordnung erhöht werden kann, beispielsweise in den Submikrometerbereich. Ein weiterer Vorteil besteht darin, dass das Verfahren keiner absoluten Referenz zur Bestimmung der Position des Läufers bedarf. Daher handelt es sich bei dem y-Sensor bevorzugt um einen inkrementell arbeitenden Sensor.

Bei bevorzugten Ausführungsformen des erfindungsgemäßen Verfahrens erfolgen weiterhin Schritte für eine Vorkalibrierung, welche vor dem ersten Kalibrierungsschritt durchzuführen sind. Es erfolgt zunächst ein Ansteuern des ersten Antriebes über die noch unkalibrierte erste x-Ansteuereinheit zum Verfahren des Läufers in die x-Richtung und ein Ansteuern des zweiten x-Antriebes über die noch unkalibrierte zweite x-Ansteuereinheit zum Verfahren des Läufers in die x-Richtung. Hierbei erfolgt das Ansteuern über die erste unkalibrierte x-Ansteuereinheit örtlich synchron zum Ansteuern über die zweite unkalibrierte x-Ansteuereinheit, wobei der erste x-Antrieb und der zweite x-Antrieb wegen der noch fehlenden Kalibrierung der ersten x-Ansteuereinheit und der zweiten x-Ansteuereinheit jeweils mit einem verbleibenden Fehler angesteuert werden, welcher von der Position des Läufers in der x-Richtung abhängig ist. Infolge dieses verbleibenden Fehlers erfolgt eine Verdrehung des Läufers und eine Auslenkung des y-Sensors in der y-Richtung, da sich der verbleibende Fehler bei den beiden x-Ansteuereinheiten unterscheidet. Die örtliche Synchronität ist dann gegeben, wenn der erste x-Antrieb und der zweite x-Antrieb zumindest zu bestimmten Zeitpunkten zu Orten angesteuert sind, die in der x-Richtung die gleiche Position aufweisen. Die durch den ersten x-Antrieb und den zweiten x-Antrieb tatsächlich erreichten Orte können wegen der noch fehlenden Kalibrierung von den angesteuerten Orten abweichen. Der erste x-Antrieb und der zweite x-Antrieb können auch permanent synchron angesteuert werden. Während des Verfahrens wird ein für die Vorkalibrierung vorgesehenes Signal des y-Sensors in Abhängigkeit von der Position des Läufers in der x-Richtung aufgezeichnet, insbesondere in den Zeitpunkten, wenn der erste x-Antrieb und der zweite x-Antrieb zu Orten angesteuert sind, die in der x-Richtung die gleiche Position aufweisen. Dabei unterbleibt bevorzugt ein Verfahren des Läufers in die y-Richtung durch ein Ansteuern des y-Antriebes über die y-Ansteuereinheit.

Im anschließenden Schritt erfolgt ein Vorkalibrieren der ersten x-Ansteuereinheit und der zweiten x-Ansteuereinheit durch ein Bewerten der im ersten Kalibrierungsschritt noch zu bewertenden, in der ersten x-Ansteuereinheit zu verarbeitenden Größe und der im ersten Kalibrierungsschritt noch zu bewertenden, in der zweiten x-Ansteuereinheit zu verarbeitenden Größe mit dem aufgezeichneten, für die Vorkalibrierung vorgesehenen Signal des y-Sensors. Das Bewerten der beiden Größen dient dazu, den verbleibenden Fehler in der örtlichen Synchronität beim Verfahren des Läufers in die x-Richtung auszugleichen, sodass lediglich die Fehler beider x-Ansteuereinheiten aneinander angeglichen werden.

Nach der Vorkalibrierung soll ein örtlich synchrones Ansteuern der beiden x-Antriebe über die vorkalibrierten x-Ansteuereinheiten nicht mehr dazu führen, dass der Läufer in die y-Richtung ausgelenkt wird. Bei dem Bewerten wird das von x abhängige Signal des y-Sensors als Funktion zum Bewerten der von x abhängigen Größen der beiden x-Ansteuereinheiten genutzt. Bevorzugt wird die von x abhängige Funktion des Signals des y-Sensors gewichtet mit einem ersten Faktor zu der von x abhängigen Funktion der Größe der ersten x-Ansteuereinheit addiert, während die von x abhängige Funktion des Signals des y-Sensors gewichtet mit dem ersten Faktor von der x abhängigen Größe der zweiten y-Ansteuereinheit subtrahiert wird, damit sich der verbleibende Fehler in der örtlichen Synchronität egalisiert.

Das Vorkalibrieren wird bevorzugt gemäß den folgenden Formeln durchgeführt:

$$X1_{vorkalibriert} = X1_{unkalibriert} + K_{X1}(x^*_1)$$

$$X2_{vorkalibriert} = X2_{unkalibriert} - K_{X2}(x^*_2)$$

$X1_{vorkalibriert}$ steht für die in der ersten x-Ansteuereinheit zu verarbeitende Größe, die in der Vorkalibrierung bewertet wurde. $X2_{vorkalibriert}$ steht für die in der zweiten x-Ansteuereinheit zu verarbeitende Größe, die in der Vorkalibrierung bewertet wurde. $X1_{unkalibriert}$ steht für die in der ersten x-Ansteuereinheit zu verarbeitende Größe, bevor diese in der Vorkalibrierung bewertet wurde. $X2_{unkalibriert}$ steht für die in der zweiten x-Ansteuereinheit zu verarbeitende Größe, bevor diese in der Vorkalibrierung bewertet wurde. $K_{X1}$ ist der in der Vorkalibrierung für die in der ersten x-Ansteuereinheit zu verarbeitende Größe zu verwendende Korrekturwert. $K_{X2}$ ist der in der Vorkalibrierung für die in der zweiten x-Ansteuereinheit zu verarbeitende Größe zu verwendende Korrekturwert. Wahrend der Vorkalibrierung gilt $x^*_1 = x^*_2$. Bevorzugt ist $K_{X1}(x^*_1) = K_{X2}(x^*_2)$. Es kann aber auch entweder $K_{X1}(x^*_1)$ oder $K_{X2}(x^*_2)$ gleich Null gewählt werden, wobei dann $K_{X2}(x^*_2)$ bzw. $K_{X1}(x^*_1)$ doppelt so groß zu wählen ist wie im Fall $K_{X1}(x^*_1) = K_{X2}(x^*_2)$.

Bevorzugt berechnen sich $K_{X1}$ und $K_{X2}$ wie folgt:

$$K_{X1}(x^*_1) = K_{X2}(x^*_2) = (A_y/2) \cdot (PosY_{X1} - PosY_{X2}) / (PosX_d - PosX_y)$$

Bei Ay handelt es sich um die von x abhängige Funktion des Signals des y-Sensors. Bei $PosX_d$ handelt es sich um die x-Komponente der Position einer Drehachse, um welche sich der Läufer infolge der Auslenkung in die Y-Richtung dreht. Diese Drehachse verläuft durch den y-Antrieb, wenn ein Verfahren des Läufers in die y-Richtung durch ein Ansteuern des y-Antriebes über die y-Ansteuereinheit unterbleibt. Bei $PosX_y$ handelt es sich um die x-Komponente der Position des y-Sensors. Bei $PosY_{X1}$ handelt es sich um die x-Komponente der Position derjenigen Komponente des Läufers, welche mit der in der ersten x-Ansteuereinheit zu verarbeitenden Größe zusammenwirkt. Insofern die in der ersten x-Ansteuereinheit zu verarbeitende Größe durch ein Signal eines x-Sensors auf dem Läufer gebildet ist, so stellt dieser x-Sensor die genannte Komponente dar. Insofern die in der ersten x-Ansteuereinheit zu verarbeitende Größe durch ein Steuersignal für einen Linearschrittmotor auf dem Läufer gebildet ist, so stellt dieser Linearschrittmotor die genannte Komponente dar. Bei $PosY_{X2}$ handelt es sich um die x-Komponente der Position derjenigen Komponente des Läufers, welche mit der in der zweiten x-Ansteuereinheit zu verarbeitenden Größe zusammenwirkt.

Nach der Vorkalibrierung erfolgt der oben beschriebene erste Kalibrierungsschritt, in dessen Vorbereitung der erste x-Antrieb und der zweite x-Antrieb mit dem ersten Versatz angesteuert werden, wobei dieses Ansteuern dann bereits über die vorkalibrierte erste x-Ansteuereinheit und über die vorkalibrierte zweite x-Ansteuereinheit erfolgt.

Die oben für bevorzugte Ausführungsformen angegebenen Formeln zur Durchführung des ersten Kalibrierungsschrittes konkretisieren sich bei einer durchgeführten Vorkalibrierung wie folgt:

$$X1_{bewertet\ 1.\ Schritt} = X1_{vorkalibriert} - K_1(x^*_1)$$

$$X2_{bewertet\ 1.\ Schritt} = X2_{vorkalibriert} - K_1(x^*_2)$$

Bei bevorzugten Ausführungsformen des erfindungsgemäßen Verfahrens wird ein zweiter Kalibrierungsschritt durchgeführt. Hierfür erfolgt zunächst ein Ansteuern des ersten x-Antriebes über die im ersten Kalibrierungsschritt kalibrierte erste x-Ansteuereinheit zum Verfahren des Läufers in die x-Richtung und ein Ansteuern des zweiten x-Antriebes über die im ersten Kalibrierungsschritt kalibrierte zweite x-Ansteuereinheit zum Verfahren des Läufers in die x-Richtung. Hierbei wird der erste x-Antrieb örtlich synchron zum zweiten x-Antrieb, jedoch mit einem zweiten Versatz in der x-Richtung angesteuert. Die örtliche Synchronität unter Einhaltung des zweiten Versatzes ist dann gegeben, wenn der erste x-Antrieb und der zweite x-Antrieb zumindest zu bestimmten Zeitpunkten zu Orten angesteuert sind, die in der x-Richtung den zweiten Versatz aufweisen. Die durch den ersten x-Antrieb und den zweiten x-Antrieb tatsächlich erreichten Orte können wegen der noch fehlenden weiteren Kalibrierung von den angesteuerten Orten abweichen. Der erste x-Antrieb und der zweite x-Antrieb können auch permanent mit dem zweiten Versatz synchron angesteuert werden. Der zweite Versatz führt wiederum dazu, dass der Läufer während des Verfahrens in einer senkrecht zur Bewegungsebene angeordneten Drehachse gedreht ist. Die Drehung erfolgt um einen zweiten Drehwinkel, der jedoch wegen der fehlenden weiteren Kalibrierung der ersten x-Ansteuereinheit und der zweiten x-Ansteuereinheit noch einen verbleibenden Drehwinkelfehler aufweist, der ebenfalls von der Position des Läufers in der x-Richtung abhängig ist. Der verbleibende variierende Drehwinkelfehler führt dazu, dass eine Auslenkung des y-Sensors in der y-Richtung variiert, wobei die variierende Auslenkung wiederum mit dem y-Sensor gemessen wird, indem ein zweites Signal des y-Sensors in Abhängigkeit von der Position des Läufers in der x-Richtung aufgezeichnet wird, insbesondere in den Zeitpunkten, wenn der erste x-Antrieb und der zweite x-Antrieb zu Orten angesteuert sind, die in der x-Richtung den zweiten Versatz aufweisen. Dabei unterbleibt bevorzugt ein Verfahren des Läufers in die y-Richtung durch ein Ansteuern des y-Antriebes über die y-Ansteuereinheit.

Anschließend erfolgt ein Kalibrieren der ersten x-Ansteuereinheit und der zweiten x-Ansteuereinheit in dem zweiten Kalibrierungsschritt durch ein Bewerten der im ersten Kalibrierungsschritt bewerteten Größen mit dem zweiten Signal des y-Sensors, um den verbleibenden Drehwinkelfehler des zweiten Drehwinkels beim Verfahren des Läufers in die x-Richtung auszugleichen. Hierfür kann wie beim ersten Kalibrierungsschritt eine Frequenzanalyse des zweiten Signals des y-Sensors erfolgen, wofür das zweite Signal des y-Sensors bezogen auf die in der x-Richtung ausgebildete Ortsfrequenz der x-Antriebe freguenzanalysiert wird, d. h. in den Frequenzraum transformiert wird. Es werden ein Koeffizient und ein Phasenwinkel einer zweiten gewählten Harmonischen der Ortsfrequenz bestimmt, wobei die beiden in den x-Ansteuereinheiten zu verarbeitenden Größen in gleichem Maße durch den Koeffizienten und den Phasenwinkel der zweiten gewählten Harmonischen des zweiten Signals des y-Sensors bewertet werden. Dabei bestimmen der Koeffizient und der Phasenwinkel der zweiten gewählten Harmonischen des zweiten Signals des y-Sensors einen Korrekturwert, der von der in der ersten x-Ansteuereinheit zu verarbeitenden Größe und von der in der zweiten x-Ansteuereinheit zu verarbeitenden Größe in gleichem Maße abgezogen wird. Diese bevorzugte Ausführung des Bewertens kann beispielsweise durch die folgenden Formeln beschrieben werden:

$$X1_{bewertet\ 2.\ Schritt} = X1_{bewertet\ 1.\ Schritt} - K_2(\overset{\bullet}{x}_1)$$

$$X2_{bewertet\ 2.\ Schritt} = X2_{bewertet\ 1.\ Schritt} - K_2(\overset{\bullet}{x}_2)$$

$X1_{bewertet\ 2.\ Schritt}$ steht für die in der ersten x-Ansteuereinheit zu verarbeitende Größe, die im zweiten Kalibrierungsschritt bewertet wurde. $X2_{bewertet\ 2.\ Schritt}$ steht für die in der zweiten x-Ansteuereinheit zu verarbeitende Größe, die im zweiten Kalibrierungsschritt bewertet wurde. $K_2$ ist der für den zweiten Kalibrierungsschritt zu verwendende Korrekturwert, der sich auf der Grundlage des Koeffizienten und des Phasenwinkels der zweiten gewählten Harmonischen des zweiten Signals des y-Sensors berechnet.

Der für den zweiten Kalibrierungsschritt zu verwendende Korrekturwert berechnet sich bevorzugt nach der folgenden Formel:

$$K_2 = A_2 \cdot \cos(\ 2 \cdot x - Z_2)$$

$A_2$ steht für den Koeffizienten der zweiten gewählten Harmonischen des zweiten Signals des y-Sensors. $Z_2$ steht für den Phasenwinkel der zweiten gewählten Harmonischen des zweiten Signals des y-Sensors.

Bei der zweiten gewählten Harmonischen der Ortsfrequenz handelt es sich bevorzugt um die Harmonische 2. Ordnung, nämlich die doppelte Ortsfrequenz. Die oben angegeben Formel für $K_2$ setzt voraus, dass es sich bei der zweiten gewählten Harmonischen der Ortsfrequenz um die Harmonische 2. Ordnung handelt. Bei der zweiten gewählten Harmonischen der Ortsfrequenz kann es sich aber auch um eine Harmonische einer anderen Ordnung, z. B. 1. oder 7. Ordnung handeln.

Bevorzugte Ausführungsformen des erfindungsgemäßen Verfahrens umfassen weiterhin einen dritten Kalibrierungsschritt. Wiederum erfolgt zunächst ein Ansteuern des ersten x-Antriebes über die im zweiten Kalibrierungsschritt kalibrierte erste x-Ansteuereinheit zum Verfahrens des Läufers in die x-Richtung und ein Ansteuern des zweiten x-Antriebes über die im zweiten Kalibrierungsschritt kalibrierte zweite x-Ansteuereinheit zum Verfahren des Läufers in die x-Richtung. Dabei werden der erste x-Antrieb und der zweite x-Antrieb örtlich synchron, aber mit einem dritten Versatz in der x-Richtung zueinander angesteuert. Die örtliche Synchronität unter Einhaltung des dritten Versatzes ist dann gegeben, wenn der erste x-Antrieb und der zweite x-Antrieb zumindest zu bestimmten Zeitpunkten zu Orten angesteuert sind, die in der x-Richtung den dritten Versatz aufweisen. Die durch den ersten x-Antrieb und den zweiten x-Antrieb tatsächlich erreichten Orte können wegen der noch fehlenden weiteren Kalibrierung von den angesteuerten Orten abweichen. Der erste x-Antrieb und der zweite x-Antrieb können auch permanent mit dem dritten Versatz synchron angesteuert werden. Der dritte Versatz führt wiederum dazu, dass der Läufer während des Verfahrens in einer senkrecht zur Bewegungsebene angeordneten Drehachse um einen dritten Drehwinkel gedreht ist. Wegen der fehlenden weiteren Kalibrierung der ersten x-Ansteuereinheit und der zweiten x-Ansteuereinheit weist der dritte Drehwinkel einen verbleibenden Drehwinkelfehler auf, welcher von der Position des Läufers in der x-Richtung abhängig ist. Der verbleibende variierende Drehwinkelfehler führt zu einer variierenden Auslenkung des y-Sensors in der y-Richtung, die mithilfe des y-Sensors gemessen werden kann. Hierfür wird ein drittes Signal des y-Sensors in Abhängigkeit von der Position des Läufers in der x-Richtung aufgezeichnet, insbesondere in den Zeitpunkten, wenn der erste x-Antrieb und der zweite x-Antrieb zu Orten angesteuert sind, die in der x-Richtung den dritten Versatz aufweisen. Wiederum unterbleibt bevorzugt ein Verfahren des Läufers in die y-Richtung durch ein Ansteuern des y-Antriebes über die y-Ansteuereinheit.

Anschließend werden die erste x-Ansteuereinheit und die zweite x-Ansteuereinheit in dem dritten Kalibrierungsschritt kalibriert, indem die im zweiten Kalibrierungsschritt bewerteten Größen mit dem dritten Signal des y-Sensors bewertet werden, um den verbleibenden Drehwinkelfehler des dritten Drehwinkels beim Verfahren des Läufers in die x-Richtung auszugleichen. Diese Bewertung erfolgt wiederum bevorzugt im Frequenzraum, wofür das dritte Signal des y-Sensors bezogen auf die in der x-Richtung ausgebildete Ortsfrequenz der x-Antriebe frequenzanalysiert wird, d. h. in den Frequenzraum transformiert wird. Es werden ein Koeffizient und ein Phasenwinkel einer dritten gewählten Harmonischen der Ortsfrequenz bestimmt, wobei die beiden in den x-Ansteuereinheiten zu verarbeitenden Größen in gleichem Maße durch den Koeffizienten und den Phasenwinkel der dritten gewählten Harmonischen des dritten Signals des y-Sensors bewertet werden. Dabei bestimmen der Koeffizient und der Phasenwinkel der dritten gewählten Harmonischen des ersten Signals des y-Sensors einen Korrekturwert, der von der in der ersten x-Ansteuereinheit zu verarbeitenden Größe und von der in der zweiten x-Ansteuereinheit zu verarbeitenden Größe in gleichem Maße abgezogen wird. Diese bevorzugte Ausführung des Bewertens kann beispielsweise durch die folgenden Formeln beschrieben werden:

$$X1_{\text{bewertet 3. Schritt}} = X1_{\text{bewertet 2. Schritt}} - K_3(x_1)$$

$$X2_{\text{bewertet 3. Schritt}} = X2_{\text{bewertet 2. Schritt}} - K_3(x_2)$$

$X1_{\text{bewertet 3. Schritt}}$ steht für die in der ersten x-Ansteuereinheit zu verarbeitende Größe, die im dritten Kalibrierungsschritt bewertet wurde. $X2_{\text{bewertet 3. Schritt}}$ steht für die in der zweiten x-Ansteuereinheit zu verarbeitende Größe, die im dritten Kalibrierungsschritt bewertet wurde. $K_3$ ist der für den dritten Kalibrierungsschritt zu verwendende Korrekturwert, der sich auf der Grundlage des Koeffizienten und des Phasenwinkels der dritten gewählten Harmonischen des dritten Signals des y-Sensors berechnet.

Der für den dritten Kalibrierungsschritt zu verwendende Korrekturwert berechnet sich bevorzugt nach der folgenden Formel:

$$K_3 = A_3 \cdot \cos(3 \cdot x - Z_3)$$

$A_3$ steht für den Koeffizienten der dritten gewählten Harmonischen des dritten Signals des y-Sensors. $Z_3$ steht für den Phasenwinkel der dritten gewählten Harmonischen des dritten Signals des y-Sensors.

Bei der dritten gewählten Harmonischen der Ortsfrequenz handelt es sich bevorzugt um die Harmonische 3. Ordnung, nämlich die dreifache Ortsfrequenz. Die oben angegebene Formel für $K_3$ setzt voraus, dass es sich bei der dritten gewählten Harmonischen der Ortsfrequenz um die Harmonische 3. Ordnung handelt. Bei der dritten gewählten Harmonischen der Ortsfrequenz kann es sich aber auch um eine Harmonische einer anderen Ordnung, z. B. 2. oder 5. Ordnung handeln.

Bevorzugt werden weitere Kalibrierungsschritte durchgeführt, die im Ablauf dem ersten, zweiten und dritten Kalibrierungsschritt gleichen und für jeweils einen weiteren Versatz beim Ansteuern der ersten x-Ansteuereinheit und der zweiten x-Ansteuereinheit durchgeführt werden, sodass es zu Drehwinkelfehlern eines weiteren Drehwinkels kommt, der in dem jeweiligen weiteren Kalibrierungsschritt auszugleichen ist. Hierfür erfolgt ein Wiederholen des Schrittes des versetzten Ansteuerns des ersten x-Antriebes über die im zuvor durchgeführten Kalibrierungsschritt kalibrierte erste x-Ansteuereinheit und Ansteuern des zweiten x-Antriebes über die im zuvor durchgeführten Kalibrierungsschritt kalibrierte zweite x-Ansteuereinheit. Dabei wird jeweils ein weiterer Versatz in der x-Richtung gewählt, sodass der Läufer während des jeweiligen Verfahrens in einer senkrecht zur Bewegungsebene angeordneten Drehachse um einen weiteren Drehwinkel gedreht ist. Der jeweilige weitere Drehwinkel weist wegen der fehlenden weiteren Kalibrierung der ersten x-Ansteuereinheit und der zweiten x-Ansteuereinheit noch einen verbleibenden Drehwinkelfehler auf, der von der Position des Läufers in der x-Richtung abhängig ist. Infolge des variierenden Drehwinkelfehlers variiert eine Auslenkung des y-Sensors in der y-Richtung, die mithilfe des y-Sensors gemessen werden kann. Hierfür wird ein weiteres Signal des y-Sensors in Abhängigkeit von der Position des Läufers in der x-Richtung aufgezeichnet, insbesondere in den Zeitpunkten, wenn der erste x-Antrieb und der zweite x-Antrieb zu Orten angesteuert sind, die in der x-Richtung den jeweiligen weiteren Versatz aufweisen. Wiederum unterbleibt bevorzugt ein Verfahren des Läufers in die y-Richtung durch ein Ansteuern des y-Antriebes über die y-Ansteuereinheit. Weiterhin wird das Kalibrieren der ersten x-Ansteuereinheit und der zweiten x-Ansteuereinheit in jeweils einem weiteren Kalibrierungsschritt wiederholt.

In jedem der weiteren Kalibrierungsschritte erfolgt ein Bewerten der im zuvor durchgeführten Kalibrierungsschritt bewerteten Größen mit dem weiteren aufgezeichneten Signal des y-Sensors, um den verbleibenden Drehwinkelfehler des weiteren Drehwinkels beim Verfahren des Läufers in der x-Richtung auszugleichen. Hierfür werden bevorzugt die zu bewertenden Größen durch die jeweilige gewählte Harmonische des weiteren Signals des y-Sensors bewertet. Die Anzahl der Kalibrierungsschritte ist entsprechend der gewünschten Genauigkeit bei der Kalibrierung des Planarantriebes zu wählen. Das Bewerten erfolgt wiederum bevorzugt im Frequenzraum, wofür das weitere aufgezeichnete Signal des y-Sensors bezogen auf die in der x-Richtung ausgebildete Ortsfrequenz der x-Antriebe frequenzanalysiert wird, d. h. in den Frequenzraum transformiert wird. Es werden ein Koeffizient und ein Phasenwinkel der jeweiligen weiteren gewählten Harmonischen der Ortsfrequenz bestimmt, wobei die beiden in den x-Ansteuereinheiten zu verarbeitenden Größen in gleichem Maße durch den Koeffizienten und den Phasenwinkel der jeweiligen weiteren gewählten Harmonischen des weiteren aufgezeichneten Signals des y-Sensors bewertet werden. Dabei bestimmen der Koeffizient und der Phasenwinkel der jeweiligen weiteren gewählten Harmonischen des weiteren aufgezeichneten Signals des y-Sensors einen Korrekturwert, der von der in der ersten x-Ansteuereinheit zu verarbeitenden Größe und von der in der zweiten x-Ansteuereinheit zu verarbeitenden Größe in gleichem Maße abgezogen wird. Diese bevorzugte Ausführung des Bewertens kann beispielsweise durch die folgenden Formeln beschrieben werden:

$$X1_{\text{bewertet n. Schritt}} = X1_{\text{bewertet (n-1). Schritt}} - K_n(\overset{\ast\ast}{x}_1)$$

$$X2_{\text{bewertet n. Schritt}} = X2_{\text{bewertet (n-1). Schritt}} - K_n(\overset{\ast\ast}{x}_2)$$

$X1_{\text{bewertet n. Schritt}}$ steht für die in der ersten x-Ansteuereinheit zu verarbeitende Größe, die im weiteren Kalibrierungsschritt bewertet wurde. $X2_{\text{bewertet n. schritt}}$ steht für die in der zweiten x-Ansteuereinheit zu verarbeitende Größe, die im weiteren Kalibrierungsschritt bewertet wurde. $K_n$ ist der für den weiteren Kalibrierungsschritt zu verwendende Korrekturwert, der sich auf der Grundlage des Koeffizienten und des Phasenwinkels der der jeweiligen gewählten Harmonischen des weiteren aufgezeichneten Signals des y-Sensors berechnet.

Der für den weiteren Kalibrierungsschritt zu verwendende Korrekturwert berechnet sich bevorzugt nach der folgenden Formel:

$$K_n = A_n \cdot \cos(n \cdot x - Z_n)$$

$A_n$ steht für den Koeffizienten der weiteren gewählten Harmonischen des weiteren aufgezeichneten Signals des y-Sensors. $Z_n$ steht für den Phasenwinkel der weiteren gewählten Harmonischen des weiteren aufgezeichneten Signals des y-Sensors.

Bevorzugt handelt es sich bei der ersten gewählten Harmonischen der Ortsfrequenz um die Harmonische 1. Ordnung, bei der ggf. verwendeten zweiten gewählten Harmonischen der Ortsfrequenz um die Harmonische 2. Ordnung und bei der ggf. verwendeten dritten gewählten Harmonischen der Ortsfrequenz um die Harmonische 3. Ordnung. Die Reihenfolge der Ordnung der gewählten Harmonischen ist aber nicht erheblich. Beispielsweise kann es sich auch bei der ersten gewählten Harmonischen der Ortsfrequenz um die Harmonische 3. Ordnung, bei der ggf. verwendeten zweiten gewählten Harmonischen der Ortsfrequenz um die Harmonische 2. Ordnung und bei der ggf. verwendeten dritten gewählten Harmonischen der Ortsfrequenz um die Harmonische 1. Ordnung handeln.

Der erste x-Antrieb, der zweite x-Antrieb und der mindestens eine y-Antrieb sind bevorzugt jeweils als ein elektromagnetischer Antrieb, insbesondere als ein elektromagnetischer Linearantrieb ausgebildet. Hierfür weisen der erste x-Antrieb und der zweite x-Antrieb bevorzugt jeweils mindestens zwei in der x-Richtung beabstandete Kraftübertragungselemente auf, deren Abstand in der x-Richtung eine Periode der beiden x-Antriebe bestimmt. Entsprechend weisen ggf. auch der eine bzw. die mehreren y-Antriebe bevorzugt jeweils mindestens zwei in der y-Richtung beabstandete Kraftübertragungselemente auf, deren Abstand in der y-Richtung eine Periode des einen bzw. der mehreren y-Antriebe bestimmt. Diese Kraftübertragungselemente der x-Antriebe und ggf. des y-Antriebes sind bevorzugt durch Pole eines Elektromagneten gebildet.

Der Stator weist bevorzugt zumindest in der x-Richtung periodisch angeordnete Kraftübertragungselemente auf, deren Abstand alternativ oder ergänzend eine Periode der beiden x-Antriebe bestimmt. Die Kraftübertragungselemente des Stators sind bevorzugt durch Zähne aus einem ferromagnetischen Material gebildet, sodass die Kraftübertragungselemente eine Zahnteilung auf dem Stator zumindest in der x-Richtung ausbilden.

Bevorzugt weist der Stator ebenfalls in der y-Richtung periodisch angeordnete Kraftübertragungselemente in Form von Zähnen aus einem ferromagnetischen Material auf. Der Abstand der Kraftübertragungselemente der beiden x-Antriebe und der Abstand der Kraftübertragungselemente des Stators sind bevorzugt gleich. Der Abstand der Kraftübertragungselemente der beiden x-Antriebe und der Abstand der Kraftübertragungselemente des Stators können aber auch unterschiedlich sein, beispielsweise wenn die beiden x-Antriebe und ggf auch der y-Antrieb als Linearschrittmotoren ausgebildet sind. Jedenfalls bestimmt entweder der Abstand der Kraftübertragungselemente der beiden x-Antriebe oder der Abstand der Kraftübertragungselemente des Stators oder sowohl der Abstand der Kraftübertragungselemente der beiden x-Antriebe als auch der Abstand der Kraftübertragungselemente des Stators die Periode der beiden x-Antriebe.

Der erste Versatz beträgt bevorzugt eine Hälfte der Periode der beiden x-Antriebe.

Die Periode der beiden x-Antriebe stellt die Wellenlänge einer Ortsfrequenz in der x-Richtung dar. Es handelt sich um diejenige Ortsfrequenz, auf welche die oben beschriebene Frequenzanalyse des Signals des y-Sensors beim ersten Kalibrierungsschritt und ggf. auch bei dem zweiten, dritten und den weiteren Kalibrierungsschritte zu beziehen ist.

Bei bevorzugten Ausführungsformen des erfindungsgemäßen Verfahrens beträgt der zweite Versatz ein Viertel der Periode der beiden x-Antriebe.

Bei bevorzugten Ausführungsformen des erfindungsgemäßen Verfahrens beträgt der dritte Versatz ein Sechstel der Periode der beiden x-Antriebe.

Jeder weitere Versatz beträgt bevorzugt ein Achtel, ein Zehntel, ein Zwölftel usw. der Periode der beiden x-Antriebe.

Weitere bevorzugte Ausführungsformen des erfindungsgemäßen Verfahrens sind für solche der oben beschriebenen Planarantriebe vorgesehen, bei denen die beiden x-Antriebe durch geregelte Antriebe gebildet sind. Hierbei umfasst die erste x-Ansteuereinheit einen auf dem Läufer angeordneten ersten x-Sensor zur Bestimmung der Position des Läufers gegenüber dem Stator in der x-Richtung. Die erste x-Ansteuereinheit ist zur Regelung der Position des Läufers in die x-Richtung ausgebildet. In gleicher Weise umfasst die zweite x-Ansteuereinheit einen auf dem Läufer angeordneten zweiten x-Sensor zur Bestimmung der Position des Läufers gegenüber dem Stator in der x-Richtung. Der erste x-Sensor ist gegenüber dem zweiten x-Sensor in der y-Richtung versetzt angeordnet. Die zweite x-Ansteuereinheit ist zur Regelung der Position des Läufers in die x-Richtung ausgebildet. Bei den beiden x-Sensoren handelt es sich bevorzugt um inkrementell arbeitende Sensoren.

Bei weiteren bevorzugten Ausführungsformen des erfindungsgemäßen Verfahrens wird eine Kalibrierung der y-Ansteuereinheit vorgenommen, welche in ihrem Prinzip der Kalibrierung der x-Ansteuereinheiten gleicht. Diese Ausführungsformen des erfindungsgemäßen Verfahrens sind für Planarantriebe vorgesehen, die einen weiteren y-Antrieb umfassen. Dabei bildet der bereits beschriebene y-Antrieb einen ersten y-Antrieb aus und der Planarantrieb umfasst weiterhin einen zweiten auf dem Läufer angeordneten y-Antrieb zum Antreiben des Läufers in die y-Richtung. Der erste y-Antrieb ist beabstandet zum zweiten y-Antrieb angeordnet. Die y-Ansteuereinheit ist zum Ansteuern des ersten y-Antriebes und des zweiten y-Antriebes ausgebildet.

Diese Ausführungsformen des erfindungsgemäßen Verfahrens umfassen weiterhin einen Schritt, bei welchem ein Ansteuern des ersten y-Antriebes und des zweiten y-Antriebes über die unkalibrierte y-Ansteuereinheit zum Verfahren des Läufers in die y-Richtung erfolgt. Dabei wird der erste y-Antrieb örtlich synchron, aber mit einem ersten y-Versatz in der y-Richtung zum zweiten y-Antrieb angesteuert, sodass der Läufer während des Verfahrens in einer senkrecht zur Bewegungsebene angeordneten Drehachse um einen ersten weiteren Drehwinkel gedreht ist. Die örtliche Synchronität unter Einhaltung des ersten y-Versatzes ist dann gegeben, wenn der erste y-Antrieb und der zweite y-Antrieb zumindest zu bestimmten Zeitpunkten zu Orten angesteuert sind, die in der y-Richtung den ersten y-Versatz aufweisen. Die durch den ersten y-Antrieb und den zweiten y-Antrieb tatsächlich erreichten Orte können wegen der noch fehlenden Kalibrierung von den angesteuerten Orten abweichen. Der erste y-Antrieb und der zweite y-Antrieb können auch permanent mit dem ersten y-Versatz synchron angesteuert werden. Der erste weitere Drehwinkel weist wegen der fehlenden Kalibrierung der y-Ansteuereinheit einen verbleibenden Drehwinkelfehler auf, der von der Position des Läufers in der y-Richtung abhängig ist. Infolge des variierenden Drehwinkelfehlers des ersten weiteren Drehwinkels variiert eine Auslenkung der x-Sensoren in der x-Richtung. Die variierende Auslenkung in der x-Richtung kann mit den beiden x-Sensoren gemessen werden. Daher wird ein Signal mindestens eines der beiden x-Sensoren der kalibrierten x-Ansteuereinheiten in Abhängigkeit von der Position des Läufers in der y-Richtung aufgezeichnet. Bevorzugt unterbleibt ein Verfahren des Läufers in die x-Richtung durch ein Ansteuern der x-Antriebe über die kalibrierten x-Ansteuereinheiten. Weiterhin erfolgt ein Kalibrieren der y-Ansteuereinheit in einem ersten weiteren Kalibrierungsschritt durch ein Bewerten einer in der y-Ansteuereinheit zu verarbeitenden Größe mit dem aufgezeichneten Signal des mindestens einen der beiden x-Sensoren, um den verbleibenden Drehwinkelfehler des ersten weiteren Drehwinkels beim Verfahren in die y-Richtung auszugleichen. Der erste y-Versatz ist bevorzugt halb so groß wie die Periode der y-Antriebe und ggf. der x-Antriebe.

Bevorzugt erfolgt ein zweiter weiterer Kalibrierungsschritt zum Kalibrieren der y-Ansteuereinheit. Hierfür werden der erste y-Antrieb und der zweite y-Antriebe über die im ersten weiteren Kalibrierungsschritt kalibrierte y-Ansteuereinheit zum Verfahren des Läufers in die y-Richtung angesteuert. Dabei wird der erste y-Antrieb örtlich synchron, aber mit einem zweiten y-Versatz in der y-Richtung zum zweiten y-Antrieb angesteuert. Folglich kommt es zu einer Drehung des Läufers in einer senkrecht zur Bewegungsebene angeordneten Drehachse um einen zweiten weiteren Drehwinkel. Die örtliche Synchronität unter Einhaltung des zweiten y-Versatzes ist dann gegeben, wenn der erste y-Antrieb und der zweite y-Antrieb zumindest zu bestimmten Zeitpunkten zu Orten angesteuert sind, die in der y-Richtung den zweiten y-Versatz aufweisen. Die durch den ersten y-Antrieb und den zweiten y-Antrieb tatsächlich erreichten Orte können wegen der noch fehlenden weiteren Kalibrierung von den angesteuerten Orten abweichen. Der erste y-Antrieb und der zweite y-Antrieb können auch permanent mit dem zweiten y-Versatz synchron angesteuert werden. Der zweite weitere Drehwinkel weist wegen der fehlenden weiteren Kalibrierung der y-Ansteuereinheit einen verbleibenden Drehwinkelfehler auf, der von der Position des Läufers in der y-Richtung abhängig ist. Infolge des variierenden Drehwinkelfehlers variiert auch eine Auslenkung der x-Sensoren in der x-Richtung, welche mit mindestens einem der beiden x-Sensoren der kalibrierten x-Ansteuereinheiten messbar ist. Daher wird ein Signal mindestens eines der beiden x-Sensoren der kalibrierten x-Ansteuereinheiten in Abhängigkeit von der Position des Läufers in der y-Richtung aufgezeichnet. Bevorzugt unterbleibt dabei ein Verfahren des Läufers in die x-Richtung durch ein Ansteuern der x-Antriebe über die kalibrierten x-Ansteuereinheiten. Das Kalibrieren der y-Ansteuereinheiten in dem zweiten weiteren Kalibrierungsschritt erfolgt durch ein Bewerten der im ersten weiteren Kalibrierungsschritt bewerteten Größe mit dem aufgezeichneten Signal des mindestens einen der beiden x-Sensoren, um den verbleibenden Drehwinkelfehler des zweiten weiteren Drehwinkels beim Verfahren in die y-Richtung auszugleichen. Der zweite y-Versatz beträgt bevorzugt ein Viertel der Periode der y-Antriebe und ggf. der x-Antriebe.

Der erste und der zweite weitere Kalibrierungsschritt zum Kalibrieren der y-Ansteuereinheit können durch nachfolgende weitere Kalibrierungsschritte fortgesetzt werden. Die nachfolgenden weiteren Kalibrierungsschritte zum Kalibrieren der y-Ansteuereinheit werden in gleicher Weise wie der erste und der zweite weitere Kalibrierungsschritt zum Kalibrieren der y-Ansteuereinheit durchgeführt, wobei jeweils ein anderer y-Versatz beim Ansteuern der y-Antriebe zu wählen ist, bevorzugt jeweils ein Sechstel, ein Achtel, ein Zehntel usw. der Periode der y-Antriebe und ggf. der x-Antriebe.

Weitere bevorzugte Ausführungsformen des erfindungsgemäßen Verfahrens sind für solche der oben beschriebenen Planarantriebe vorgesehen, welche zwei y-Antriebe aufweisen. Bei diesen Ausführungsformen wird jeweils vor den einzelnen Kalibrierungsschritten das Ansteuern der x-Antriebe wiederholt, wobei bei der Wiederholung ein Verfahren des Läufers in die y-Richtung durch ein Ansteuern des jeweils anderen der beiden y-Antriebe über die y-Ansteuer-einheit unterbleibt. Hierfür erfolgen zunächst ein Ansteuern des ersten x-Antriebes über die erste x-Ansteuereinheit zum Verfahren des Läufers in die x-Richtung und ein Ansteuern des zweiten x-Antriebes über die zweite x-Ansteuereinheit zum Verfahren des Läufers in die x-Richtung. Dabei wird der erste x-Antrieb örtlich synchron mit dem ersten Versatz in der x-Richtung zum zweiten x-Antrieb angesteuert, wobei ein Verfahren des Läufers in die y-Richtung durch ein Ansteuern des ersten y-Antriebes über die y-Ansteuereinheit unterbleibt. Dabei wird das erste Signal des y-Sensors aufgezeichnet. In der Wiederholung erfolgen vor der Durchführung des ersten Kalibrierungsschrittes ein Ansteuern des ersten x-Antriebes über die erste x-Ansteuereinheit zum Verfahren des Läufers in die x-Richtung und ein Ansteuern des zweiten x-Antriebes über die zweite x-Ansteuereinheit zum Verfahren des Läufers in die x-Richtung. Dabei wird der erste x-Antrieb wieder örtlich synchron mit dem ersten Versatz oder alternativ mit dem entgegengesetzten ersten Versatz in der x-Richtung zum zweiten x-Antrieb angesteuert, wobei ein Verfahren des Läufers in die y-Richtung durch ein Ansteuern des zweiten y-Antriebes über die y-Ansteuer-einheit unterbleibt. Es wird nun ein erstes Wiederholungssignal des y-Sensors in Abhängigkeit von der Position des Läufers in der x-Richtung aufgezeichnet. Es erfolgt eine Differenzbildung zwischen dem ersten Signal des y-Sensors und dem ersten Wiederholungssignal des y-Sensors, sodass Fehler des y-Sensors reduziert werden. Das Kalibrieren der ersten x-Ansteuereinheit und der zweiten x-Ansteuereinheit im ersten Kalibrierungsschritt erfolgt dann durch ein Bewerten der in der ersten x-Ansteuereinheit zu verarbeitenden Größe und der in der zweiten x-Ansteuereinheit zu verarbeitenden Größe mit dem der Differenzbildung unterzogenen ersten Signal des y-Sensors.

Bei Ausführungsformen des erfindungsgemäßen Verfahrens, bei denen der zweite Kalibrierungsschritt durchgeführt wird, erfolgt bevorzugt auch ein wiederholtes Ansteuern der beiden x-Antriebe in gleicher Weise wie vor dem ersten Kalibrierungsschritt. Hierfür erfolgen zunächst ein Ansteuern des ersten x-Antriebes über die erste x-Ansteuereinheit zum Verfahren des Läufers in die x-Richtung und ein Ansteuern des zweiten x-Antriebes über die zweite x-Ansteuereinheit zum Verfahren des Läufers in die x-Richtung. Dabei wird der erste x-Antrieb örtlich synchron mit dem zweiten Versatz in der x-Richtung zum zweiten x-Antrieb angesteuert, wobei ein Verfahren des Läufers in die y-Richtung durch ein Ansteuern des ersten y-Antriebes über die y-Ansteuereinheit unterbleibt. Dabei wird das zweite Signal des y-Sensors aufgezeichnet. In der Wiederholung erfolgen vor der Durchführung des zweiten Kalibrierungsschrittes ein Ansteuern des ersten x-Antriebes über die erste x-Ansteuereinheit zum Verfahren des Läufers in die x-Richtung und ein Ansteuern des zweiten x-Antriebes über die zweite x-Ansteuereinheit zum Verfahren des Läufers in die x-Richtung. Dabei wird der erste x-Antrieb wieder örtlich synchron mit dem zweiten Versatz oder alternativ mit dem entgegengesetzten zweiten Versatz in der x-Richtung zum zweiten x-Antrieb angesteuert, wobei ein Verfahren des Läufers in die y-Richtung durch ein Ansteuern des zweiten y-Antriebes über die y-Ansteuereinheit unterbleibt. Es wird nun ein zweites Wiederholungssignal des y-Sensors in Abhängigkeit von der Position des Läufers in der x-Richtung aufgezeichnet. Es erfolgt eine Differenzbildung zwischen dem zweiten Signal des y-Sensors und dem zweiten Wiederholungssignal des y-Sensors, sodass Fehler des y-Sensors reduziert werden. Das Kalibrieren der ersten x-Ansteuereinheit und der zweiten x-Ansteuereinheit im zweiten Kalibrierungsschritt erfolgt dann durch ein Bewerten der in der ersten x-Ansteuereinheit zu verarbeitenden Größe und der in der zweiten x-Ansteuereinheit zu verarbeitenden Größe mit dem der Differenzbildung unterzogenen zweiten Signal des y-Sensors.

Bei Ausführungsformen des erfindungsgemäßen Verfahren, bei denen der dritte Kalibrierungsschritt durchgeführt wird, erfolgt bevorzugt auch ein wiederholtes Ansteuern der beiden x-Antriebe in gleicher Weise wie vor dem ersten und dem zweiten Kalibrierungsschritt. Hierfür erfolgen zunächst ein Ansteuern des ersten x-Antriebes über die erste x-Ansteuereinheit zum Verfahren des Läufers in die x-Richtung und ein Ansteuern des zweiten x-Antriebes über die zweite x-Ansteuereinheit zum Verfahren des Läufers in die x-Richtung. Dabei wird der erste x-Antrieb örtlich synchron mit dem dritten Versatz in der x-Richtung zum zweiten x-Antrieb angesteuert, wobei ein Verfahren des Läufers in die y-Richtung durch ein Ansteuern des ersten y-Antriebes über die y-Ansteuereinheit unterbleibt. Dabei wird das dritte Signal des y-Sensors aufgezeichnet. In der Wiederholung erfolgen vor der Durchführung des dritten Kalibrierungsschrittes ein Ansteuern des ersten x-Antriebes über die erste x-Ansteuereinheit zum Verfahren des Läufers in die x-Richtung und ein Ansteuern des zweiten x-Antriebes über die zweite x-Ansteuereinheit zum Verfahren des Läufers in die x-Richtung. Dabei wird der erste x-Antrieb wieder örtlich synchron mit dem dritten Versatz oder alternativ mit dem entgegengesetzten dritten Versatz in der x-Richtung zum zweiten x-Antrieb angesteuert, wobei ein Verfahren des Läufers in die y-Richtung durch ein Ansteuern des zweiten y-Antriebes über die y-Ansteuereinheit unterbleibt. Es wird nun ein drittes Wiederholungssignal des y-Sensors in Abhängigkeit von der Position des Läufers in der x-Richtung aufgezeichnet. Es erfolgt eine Differenzbildung zwischen dem dritten Signal des y-Sensors und dem dritten Wiederholungssignal des y-Sensors, sodass Fehler des y-Sensors reduziert werden. Das Kalibrieren der ersten x-Ansteuereinheit und der zweiten x-Ansteuereinheit im dritten Kalibrierungsschritt erfolgt dann durch ein Bewerten der in der ersten x-Ansteuereinheit zu verarbeitenden Größe und der in der zweiten x-Ansteuereinheit zu verarbeitenden Größe mit dem der Differenzbildung unterzogenen dritten Signal des y-Sensors.

Bei Ausführungsformen des erfindungsgemäßen Verfahren, bei denen die weiteren Kalibrierungsschritte durchgeführt werden, erfolgt bevorzugt auch ein wiederholtes Ansteuern der beiden x-Antriebe in gleicher Weise wie vor dem ersten, dem zweiten und dem dritten Kalibrierungsschritt. Hierfür erfolgen zunächst ein Ansteuern des ersten x-Antriebes über die erste x-Ansteuereinheit zum Verfahren des Läufers in die x-Richtung und ein Ansteuern des zweiten x-Antriebes über die zweite x-Ansteuereinheit zum Verfahren des Läufers in die x-Richtung. Dabei wird der erste x-Antrieb örtlich synchron mit dem jeweiligen weiteren Versatz in der x-Richtung zum zweiten x-Antrieb angesteuert, wobei ein Verfahren des Läufers in die y-Richtung durch ein Ansteuern des ersten y-Antriebes über die y-Ansteuereinheit unterbleibt. Dabei wird das jeweilige weitere Signal des y-Sensors aufgezeichnet. In der Wiederholung erfolgen vor der Durchführung des weiteren Kalibrierungsschrittes jeweils ein Ansteuern des ersten x-Antriebes über die erste x-Ansteuereinheit zum Verfahren des Läufers in die x-Richtung und ein Ansteuern des zweiten x-Antriebes über die zweite x-Ansteuereinheit zum Verfahren des Läufers in die x-Richtung. Dabei wird der erste x-Antrieb wieder örtlich synchron mit dem jeweiligen weiteren Versatz oder alternativ mit dem entgegengesetzten jeweiligen weiteren Versatz in der x-Richtung zum zweiten x-Antrieb angesteuert, wobei ein Verfahren des Läufers in die y-Richtung durch ein Ansteuern des zweiten y-Antriebes über die y-Ansteuereinheit unterbleibt. Es wird nun ein weiteres Wiederholungssignal des y-Sensors in Abhängigkeit von der Position des Läufers in der x-Richtung aufgezeichnet. Es erfolgt jeweils eine Differenzbildung zwischen dem weiteren Signal des y-Sensors und dem weiteren Wiederholungssignal des y-Sensors, sodass Fehler des y-Sensors reduziert werden. Das Kalibrieren der ersten x-Ansteuereinheit und der zweiten x-Ansteuereinheit in dem jeweiligen weiteren Kalibrierungsschritt erfolgt dann durch ein Bewerten der in der ersten x-Ansteuereinheit zu verarbeitenden Größe und der in der zweiten x-Ansteuereinheit zu verarbeitenden Größe mit dem der Differenzbildung unterzogenen weiteren Signal des y-Sensors.

Bei Ausführungsformen des erfindungsgemäßen Verfahrens, bei denen der beschriebene erste weitere Kalibrierungsschritt zum Kalibrieren der y-Ansteuer-einheit, ggf. der zweite weitere Kalibrierungsschritt zum Kalibrieren der y-Ansteuereinheit und ggf. die nachfolgenden weiteren Kalibrierungsschritte zum Kalibrieren der y-Ansteuereinheit durchgeführt werden, erfolgt die Durchführung des erfindungsgemäßen Verfahrens bevorzugt iterativ. Dabei werden der erste Kalibrierungsschritt zum Kalibrieren der ersten x-Ansteuereinheit und der zweiten x-Ansteuereinheit, ggf. die Vorkalibrierung und ggf. der zweite, dritte und die weiteren Kalibrierungsschritte zum Kalibrieren der ersten x-Ansteuereinheit und der zweiten x-Ansteuereinheit einschließlich des jeweiligen vorausgehenden Ansteuerns der beiden x-Antriebe erneut durchgeführt, nachdem der erste weitere Kalibrierungsschritt zum Kalibrieren der y-Ansteuereinheit, ggf. der zweite weitere Kalibrierungsschritt zum Kalibrieren der y-Ansteuereinheit und ggf. die nachfolgenden weiteren Kalibrierungsschritte zum Kalibrieren der y-Ansteuereinheit durchgeführt wurden. Die iterative Durchführung mindert den Einfluss des Fehlers des y-Sensors auf die Kalibrierung der ersten x-Ansteuer-einheit und der zweiten x-Ansteuer-einheit. Beim wiederholten Durchführen des ersten Kalibrierungsschrittes zum Kalibrieren der ersten x-Ansteuereinheit und der zweiten x-Ansteuereinheit, einschließlich ggf. der Vorkalibrierung und ggf. des zweiten, dritten und der weiteren Kalibrierungsschritte zum Kalibrieren der ersten x-Ansteuereinheit und der zweiten x-Ansteuereinheit ist der y-Sensor bereits zumindest ein erstes Mal kalibriert worden, sodass die Genauigkeit beim Kalibrieren der ersten x-Ansteuereinheit und der zweiten x-Ansteuereinheit auf der Grundlage des genaueren Signals des y-Sensors erhöht ist. In vielen Fällen bedarf es nur einer Wiederholung, jedoch kann auch mehr als eine Wiederholung durchgeführt werden, um die gewünschte Genauigkeit zu erzielen.

Der Stator des durch das erfindungsgemäße Verfahren zu kalibrierenden Planarantriebes weist bevorzugt eine periodische Magnetzahnteilung in der x-Richtung und eine periodische Magnetzahnteilung in der y-Richtung auf. Die periodische Magnetzahnteilung in der x-Richtung und die periodische Magnetzahnteilung in der y-Richtung weisen bevorzugt die gleiche Periodenlänge auf.

Der erste x-Antrieb und der zweite x-Antrieb weisen bevorzugt jeweils mindestens einen Elektromagneten auf, dessen Pole einen Abstand zueinander besitzen, welcher der Periodenlänge der Magnetzahnteilung des Stators in der x-Richtung gleich

Der y-Antrieb weist bevorzugt mindestens einen Elektromagneten auf, dessen Pole einen Abstand besitzen, welcher der Periodenlänge der Magnetzahnteilung des Stators in der y-Richtung gleicht.

Der Läufer weist bevorzugt eine rechteckige Grundfläche auf, welche parallel zum ebenen Stator ausgerichtet ist.

Der y-Sensor ist bevorzugt in der Mitte der rechteckförmigen Grundfläche angeordnet. Dabei ist der y-Sensor bevorzugt in der Mitte zwischen dem ersten x-Antrieb und dem zweiten x-Antrieb angeordnet.

Auch kann ein zweiter y-Sensor auf dem Läufer angeordnet sein, sodass der oben beschriebene y-Sensor den ersten y-Sensor bildet. Der zweite y-Sensor ist bevorzugt in der x-Richtung beabstandet zum ersten y-Sensor angeordnet.

Der erste x-Antrieb und der zweite x-Antrieb sind bevorzugt auch in der x-Richtung zueinander versetzt auf dem Läufer angeordnet.

Der y-Antrieb ist bevorzugt sowohl in der x-Richtung als auch in der y-Richtung versetzt zum y-Sensor auf dem Läufer angeordnet.

Der erste x-Sensor und der zweite x-Sensor sind bevorzugt gegenüber dem y-Sensor in der y-Richtung versetzt auf dem Läufer angeordnet.

Der erste x-Sensor, der zweite x-Sensor und der y-Sensor weisen bevorzugt dieselbe Position in der x-Richtung auf dem Läufer auf.

Der y-Sensor ist bevorzugt mittig zwischen dem ersten x-Sensor und dem zweiten x-Sensor angeordnet.

Der erfindungsgemäße Planarantrieb umfasst zunächst einen bevorzugt ebenen Stator und einen gegenüber dem Stator in eine x-Richtung und in eine y-Richtung verfahrbaren Läufer. Die x-Richtung und die y-Richtung spannen eine Bewegungsebene des Läufers auf. Der Planarantrieb umfasst weiterhin einen ersten auf dem Läufer angeordneten x-Antrieb zum Antreiben des Läufers in die x-Richtung. Eine erste x-Ansteuereinheit dient dem Ansteuern des ersten x-Antriebes. Weiterhin umfasst der Planarantrieb einen zweiten x-Antrieb zum Antreiben des Läufers in die x-Richtung. Der zweite x-Antrieb ist gegenüber dem ersten x-Antrieb in der y-Richtung versetzt auf dem Läufer angeordnet. Eine zweite x-Ansteuereinheit dient dem Ansteuern des zweiten x-Antriebes. Weiterhin umfasst der Planarantrieb einen y-Antrieb zum Antreiben des Läufers in die y-Richtung. Ein y-Sensor des Planarantriebes dient der Bestimmung der Position des Läufers gegenüber dem Stator in der y-Richtung. Der y-Sensor ist in der Bewegungsebene beabstandet zum y-Antrieb auf dem Läufer angeordnet. Bevorzugt umfasst der Planarantrieb eine den y-Sensor umfassende y-Ansteuereinheit zum Ansteuern des y-Antriebes. Erfindungsgemäß sind zumindest die erste x-Ansteuereinheit und die zweite x-Ansteuereinheit zur Ausführung des erfindungsgemäßen Verfahrens konfiguriert. Bevorzugt sind die erste x-Ansteuereinheit und die zweite x-Ansteuereinheit zur Ausführung bevorzugter Ausführungsformen des erfindungsgemäßen Verfahrens konfiguriert. Bevorzugt ist auch die y-Ansteuereinheit zur Ausführung bevorzugter Ausführungsformen des erfindungsgemäßen Verfahrens konfiguriert. Im Weiteren weist der erfindungsgemäße Planarantrieb bevorzugt auch solche Merkmale auf, die für bevorzugte Ausführungsformen des erfindungsgemäßen Verfahrens als bevorzugte Merkmale des zu kalibrierenden Planarantriebes angegeben sind.

Weitere Einzelheiten des erfindungsgemäßen Planarantriebes ergeben sich aus der nachfolgenden Beschreibung einer bevorzugten Ausführungsform, unter Bezugnahme auf die Zeichnung.

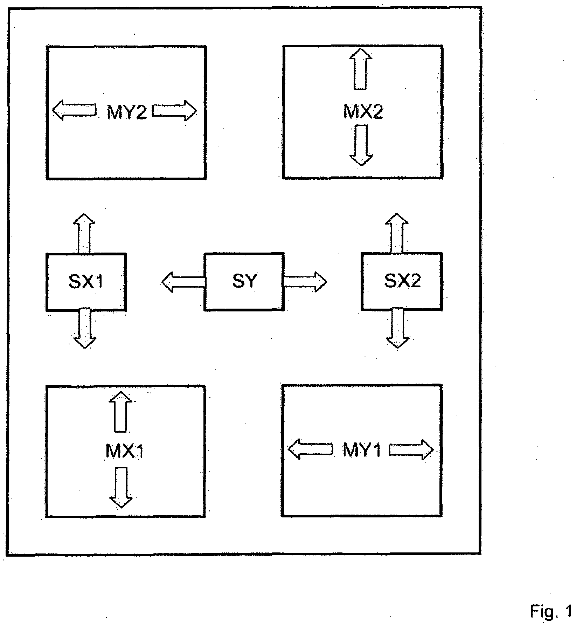

Die einzige Fig. 1 zeigt einen Läufer einer bevorzugten Ausführungsform eines erfindungsgemäßen Planarantriebes in einer Prinzipdarstellung. Der Läufer des Planarantriebes ist dazu ausgebildet, über einen Stator (nicht gezeigt) sowohl in einer x-Richtung als auch in einer y-Richtung verfahren zu werden. Der Läufer weist eine rechteckförmige Grundfläche auf, auf der ein erster x-Antrieb MX1, ein zweiter x-Antrieb MX2, ein erster y-Antrieb MY1 und ein zweiter y-Antrieb MY2 angeordnet sind. Weiterhin sind auf der rechteckförmigen Grundfläche des Läufers ein erster x-Sensor SX1, ein zweiter x-Sensor SX2 und ein y-Sensor SY angeordnet. Der y-Sensor SY befindet sich in der Mitte der rechteckförmigen Grundfläche des Läufers und mittig zwischen dem ersten x-Antrieb MX1 und dem zweiten x-Antrieb MX2, und auch mittig zwischen dem ersten y-Antrieb MY1 und dem zweiten y-Antrieb MY2 sowie mittig zwischen dem ersteh x-Sensor SX1 und dem zweiten x-Sensor SX2. Der erste y-Antrieb MY1 befindet sich beabstandet zum y-Sensor SY, wobei ein Versatz in der x-Richtung als auch in der y-Richtung gegeben ist. Der erste x-Antrieb MX1 ist in der y-Richtung beabstandet zum zweiten x-Antrieb MX2 angeordnet. Auch ist der erste x-Antrieb MX1 beabstandet in der x-Richtung zum zweiten x-Antrieb MX2 angeordnet. Der erste x-Antrieb MX1 und der zweite x-Antrieb MX2 sind jeweils beabstandet zum y-Antrieb MY1 angeordnet.

**Patentansprüche**

1. Verfahren zur Kalibrierung eines Planarantriebes, der einen Stator und einen gegenüber dem Stator in eine x-Richtung und in eine y-Richtung verfahrbaren Läufer umfasst, wobei die x-Richtung und die y-Richtung eine Bewegungsebene des Läufers aufspannen, und wobei der Planarantrieb folgende weitere Komponenten umfasst:

   - einen ersten auf dem Läufer angeordneten x-Antrieb zum Antreiben des Läufers in die x-Richtung;
   - eine erste x-Ansteuereinheit;
   - einen zweiten x-Antrieb zum Antreiben des Läufers in die x-Richtung, wobei der zweite x-Antrieb gegenüber dem ersten x-Antrieb in die y-Richtung versetzt auf dem Läufer angeordnet ist;
   - eine zweite x-Ansteuereinheit;
   - einen y-Antrieb zum Antreiben des Läufers in die y-Richtung; und
   - einen y-Sensor zur Bestimmung der Position des Läufers gegenüber dem Stator in der y-Richtung, wobei der y-Sensor in der Bewegungsebene in der x-Richtung beabstandet zum y-Antrieb auf dem Läufer angeordnet ist;

   **dadurch gekennzeichnet, dass** das Verfahren folgende Schritte umfasst:

   - Ansteuern des ersten x-Antriebes über die erste x-Ansteuereinheit zum Verfahren des Läufers in die x-Richtung und Ansteuern des zweiten x-Antriebes über die zweite x-Ansteuereinheit zum Verfahren des Läufers in die x-Richtung, wobei der erste x-Antrieb örtlich synchron mit einem ersten Versatz in der x-Richtung zum zweiten x-Antrieb angesteuert wird, und wobei ein erstes Signal des y-Sensors in Abhängigkeit von der Position des Läufers in der x-Richtung aufgezeichnet wird; und
   - Kalibrieren der ersten x-Ansteuereinheit und der zweiten x-Ansteuereinheit in einem ersten Kalibrierungsschritt durch ein Bewerten einer in der ersten x-Ansteuereinheit zu verarbeitenden Größe und einer in der zweiten x-Ansteuereinheit zu verarbeitenden Größe mit dem ersten Signal des y-Sensors.

2. Verfahren nach Anspruch 1, **dadurch gekennzeichnet, dass** es weiterhin folgende Schritte umfasst, welche vor dem ersten Kalibrierungsschritt durchzuführen sind:

   - Ansteuern des ersten x-Antriebes über die unkalibrierte erste x-Ansteuereinheit zum Verfahren des Läufers in die x-Richtung und Ansteuern des zweiten x-Antriebes über die unkalibrierte zweite x-Ansteuereinheit zum Verfahren des Läufers in die x-Richtung, wobei das Ansteuern über die erste unkalibrierte x-Ansteuereinheit und das Ansteuern über die zweite unkalibrierte x-Ansteuereinheit örtlich synchron erfolgen, und wobei ein für eine Vorkalibrierung vorgesehenes Signal des y-Sensors in Abhängigkeit von der Position des Läufers in der x-Richtung aufgezeichnet wird; und
   - Vorkalibrieren der ersten x-Ansteuereinheit und der zweiten x-Ansteuereinheit durch ein Bewerten der im ersten Kalibrierungsschritt noch zu bewertenden, in der ersten x-Ansteuereinheit zu verarbeitenden Größe und der im ersten Kalibrierungsschritt noch zu bewertenden, in der zweiten x-Ansteuereinheit zu verarbeitenden Größe mit dem aufgezeichneten, für die Vorkalibrierung vorgesehenen Signal des y-Sensors.

3. Verfahren nach Anspruch 1 oder 2, **dadurch gekennzeichnet, dass** es weiterhin folgende Schritte umfasst:

   - Ansteuern des ersten x-Antriebes über die im ersten Kalibrierungsschritt kalibrierte erste x-Ansteuereinheit zum Verfahren des Läufers in die x-Richtung und Ansteuern des zweiten x-Antriebes über die im ersten Kalibrierungsschritt kalibrierte zweite x-Ansteuereinheit zum Verfahren des Läufers in die x-Richtung, wobei der erste x-Antrieb örtlich synchron mit einem zweiten Versatz in der x-Richtung zum zweiten x-Antrieb angesteuert wird, sodass der Läufer während des Verfahrens in einer senkrecht zur Bewegungsebene angeordneten Drehachse um einen zweiten Drehwinkel gedreht ist, wobei der zweite Drehwinkel wegen der fehlenden weiteren Kalibrierung der ersten x-Ansteuereinheit und der zweiten x-Ansteuereinheit einen verbleibenden, von der Position des Läufers in der x-Richtung abhängigen Drehwinkelfehler aufweist, infolgedessen eine Auslenkung des y-Sensors in der y-Richtung variiert, und wobei ein zweites Signal des y-Sensors in Abhängigkeit von der Position des Läufers in der x-Richtung aufgezeichnet wird; und

- Kalibrieren der ersten x-Ansteuereinheit und der zweiten x-Ansteuereinheit in einem zweiten Kalibrierungsschritt durch ein Bewerten der im ersten Kalibrierungsschritt bewerteten Größen mit dem zweiten Signal des y-Sensors, um den verbleibenden Drehwinkelfehler des zweiten Drehwinkels beim Verfahren des Läufers in die x-Richtung auszugleichen.

4. Verfahren nach Anspruch 3, **dadurch gekennzeichnet, dass** es weiterhin folgende Schritte umfasst:

- Ansteuern des ersten x-Antriebes über die im zweiten Kalibrierungsschritt kalibrierte erste x-Ansteuereinheit zum Verfahren des Läufers in die x-Richtung und Ansteuern des zweiten x-Antriebes über die im zweiten Kalibrierungsschritt kalibrierte zweite x-Ansteuereinheit zum Verfahren des Läufers in die x-Richtung, wobei der erste x-Antrieb örtlich synchron mit einem dritten Versatz in der x-Richtung zum zweiten x-Antrieb angesteuert wird, sodass der Läufer während des Verfahrens in einer senkrecht zur Bewegungsebene angeordneten Drehachse um einen dritten Drehwinkel gedreht ist, wobei der dritte Drehwinkel wegen der fehlenden weiteren Kalibrierung der ersten x-Ansteuereinheit und der zweiten x-Ansteuereinheit einen verbleibenden, von der Position des Läufers in der x-Richtung abhängigen Drehwinkelfehler aufweist, infolgedessen eine Auslenkung des y-Sensors in der y-Richtung variiert, und wobei ein drittes Signal des y-Sensors in Abhängigkeit von der Position des Läufers in der x-Richtung aufgezeichnet wird; und

- Kalibrieren der ersten x-Ansteuereinheit und der zweiten x-Ansteuereinheit in einem dritten Kalibrierungsschritt durch ein Bewerten der im zweiten Kalibrierungsschritt bewerteten Größen mit dem dritten Signal des y-Sensors, um den verbleibenden Drehwinkelfehler des dritten Drehwinkels beim Verfahren des Läufers in die x-Richtung auszugleichen.

5. Verfahren nach einem der Ansprüche 1 bis 4, **dadurch gekennzeichnet, dass** der erste x-Antrieb und der zweite x-Antrieb jeweils mindestens zwei in der x-Richtung beabstandete Kraftübertragungselemente aufweisen, deren Abstand in der x-Richtung eine Periode der beiden x-Antriebe bestimmt, wobei der erste Versatz eine Hälfte der Periode beträgt.

6. Verfahren nach einem der Ansprüche 1 bis 5, **dadurch gekennzeichnet, dass** der Stator in der x-Richtung periodisch angeordnete Kraftübertragungselemente aufweist, deren Abstand eine Periode der beiden x-Antriebe bestimmt, wobei der erste Versatz eine Hälfte der Periode beträgt.

7. Verfahren nach Anspruch 3 oder einem auf diesen rückbezogenen Anspruch, **dadurch gekennzeichnet, dass** der zweite Versatz ein Viertel der Periode beträgt.

8. Verfahren nach einem der Ansprüche 1 bis 7, **dadurch gekennzeichnet, dass**:

- die erste x-Ansteuereinheit einen auf dem Läufer angeordneten ersten x-Sensor zur Bestimmung der Position des Läufers gegenüber dem Stator in der x-Richtung umfasst, wobei die erste x-Ansteuereinheit zur Regelung der Position des Läufers in der x-Richtung ausgebildet ist;

- die zweite x-Ansteuereinheit einen auf dem Läufer angeordneten zweiten x-Sensor zur Bestimmung der Position des Läufers gegenüber dem Stator in der x-Richtung umfasst, wobei der erste x-Sensor gegenüber dem zweiten x-Sensor in der y-Richtung versetzt angeordnet ist, und wobei die zweite x-Ansteuereinheit zur Regelung der Position des Läufers in der x-Richtung ausgebildet ist; und

- das Kalibrieren der ersten x-Ansteuereinheit und der zweiten x-Ansteuereinheit in dem ersten Kalibrierungsschritt dadurch erfolgt, dass das Signal des ersten x-Sensors und das Signal des zweiten x-Sensors in gleichem Maße mit dem ersten Signal des y-Sensors bewertet werden.

9. Verfahren nach Anspruch 8, **dadurch gekennzeichnet, dass**:

- der y-Antrieb einen ersten y-Antrieb bildet und der Planarantrieb weiterhin einen zweiten auf dem Läufer angeordneten y-Antrieb zum Antreiben des Läufers in die y-Richtung umfasst, der in der Bewegungsebene beabstandet zum ersten y-Antrieb angeordnet ist; und

- dass der Planarantrieb weiterhin eine y-Ansteuereinheit zum Ansteuern des ersten y-Antriebes und des zweiten y-Antriebes umfasst;

wobei das Verfahren weiterhin folgende Schritte umfasst:

- Ansteuern des ersten y-Antriebes und des zweiten y-Antriebes über die unkalibrierte y-Ansteuereinheit zum Verfahren des Läufers in die y-Richtung, wobei der erste y-Antrieb örtlich synchron mit einem ersten y-Versatz in der y-Richtung zum zweiten y-Antrieb angesteuert wird, sodass der Läufer während des Verfahrens in einer weiteren senkrecht zur Bewegungsebene angeordneten Drehachse um einen ersten weiteren Drehwinkel gedreht wird, wobei der erste weitere Drehwinkel wegen der fehlenden Kalibrierung der y-Ansteuereinheit einen verbleibenden, von der Position des Läufers in der y-Richtung abhängigen Drehwinkelfehler aufweist, infolgedessen eine Auslenkung der beiden x-Sensoren in die x-Richtung variiert, und wobei ein Signal mindestens einer der beiden x-Sensoren der kalibrierten x-Ansteuereinheiten in Abhängigkeit von der Position des Läufers in der y-Richtung aufgezeichnet wird; und

- Kalibrieren der y-Ansteuereinheit in einem ersten weiteren Kalibrierungsschritt durch ein Bewerten einer in der y-Ansteuereinheit zu verarbeitenden Größe mit dem aufgezeichneten Signal des mindestens einen der beiden x-Sensoren, um den verbleibenden Drehwinkelfehler des ersten weiteren Drehwinkels beim Verfahren in die y-Richtung auszugleichen.

**10.** Planarantrieb, umfassend:

- einen Stator;
- einen gegenüber dem Stator in eine x-Richtung und in eine y-Richtung verfahrbaren Läufer, wobei die x-Richtung und die y-Richtung eine Bewegungsebene des Läufers aufspannen;
- einen ersten auf dem Läufer angeordneten x-Antrieb zum Antreiben des Läufers in die x-Richtung,
- eine erste x-Ansteuereinheit;
- einen zweiten x-Antrieb zum Antreiben des Läufers in die x-Richtung, wobei der zweite x-Antrieb gegenüber dem ersten x-Antrieb in der y-Richtung versetzt auf dem Läufer angeordnet ist;
- eine zweite x-Ansteuereinheit;
- einen y-Antrieb zum Antreiben des Läufers in die y-Richtung; und
- einen y-Sensor zur Bestimmung der Position des Läufers gegenüber dem Stator in der y-Richtung, wobei der y-Sensor in der Bewegungsebene beabstandet zum y-Antrieb auf dem Läufer angeordnet ist;

**dadurch gekennzeichnet, dass** zumindest die erste x-Ansteuereinheit und die zweite x-Ansteuereinheit zur Ausführung des Verfahrens nach einem der Ansprüche 1 bis 9 konfiguriert sind.

**Claims**

1. Method for calibrating a planar drive which comprises a stator and a rotor which can move with respect to the stator in an x direction and in a y direction, wherein the x direction and the y direction span a movement plane of the rotor, and wherein the planar drive comprises the following further components:

- a first x drive, arranged on the rotor, for driving the rotor in the x direction;
- a first x actuation unit;
- a second x drive for driving the rotor in the x direction, wherein the second x drive is arranged on the rotor, offset in the y direction with respect to the first x drive;
- a second x actuation unit;
- a y drive for driving the rotor in the y direction; and
- a y sensor for determining the position of the rotor with respect to the stator in the y direction, wherein the y sensor is arranged on the rotor spaced apart from the y drive in the movement plane in the x direction;

**characterized in that** the method comprises the following steps:

- actuating the first x drive by means of the first x actuation unit to move the rotor in the x direction, and actuating the second x drive by means of the second x actuation unit to move the rotor in the x direction, wherein the first x drive is actuated in a positionally synchronous fashion with a first offset in the x direction with respect to the second x drive, and where a first signal of the y sensor is recorded as a function of the position of the rotor in the x direction; and
- calibrating the first x actuation unit and the second x actuation unit in a first calibration step by evaluating a variable to be processed in the first x actuation unit and a variable to be processed in the second x actuation unit, with the first signal of the y sensor.

**2.** Method according to Claim 1, **characterized in that** it also comprises the following steps, which are to be carried out before the first calibration step:

- actuating the first x drive by means of the uncalibrated first x actuation unit to move the rotor in the x direction and actuating the second x drive by means of the uncalibrated second x actuation unit to move the rotor in the x direction, wherein the actuation by means of the first uncalibrated x actuation unit and the actuation by means of the second uncalibrated x actuation unit take place in a positionally synchronous fashion, and wherein a signal for the y sensor, provided for precalibration, is recorded as a function of the position of the rotor in the x direction; and
- precalibrating the first x actuation unit and the second x actuation unit by evaluating the variable which is still to be evaluated in the first calibration step and processed in the first x actuation unit and the variable which is still to be evaluated in the first calibration step and processed in the second x actuation unit, with the recorded signal of the y sensor which is provided for the precalibration.

**3.** Method according to Claim 1 or 2, **characterized in that** it also comprises the following steps:

- actuating the first x drive by means of the first x actuation unit which is calibrated in the first calibration step to move the rotor in the x direction, and actuating the second x drive by means of the second x actuation unit, which is calibrated in the first calibration step, to move the rotor in the x direction, wherein the first x drive is actuated in a positionally synchronous fashion with a second offset in the x direction with respect to the second x drive, with the result that during the movement the rotor is rotated about a second rotational angle in a rotational axis which is arranged perpendicularly with respect to the movement plane, wherein owing to the lack of further calibration of the first x actuation unit and of the second x actuation unit the second rotational angle has a residual rotational angle error which is dependent on the position of the rotor in the x direction and as a result of which deflection of the y sensor in the y direction varies, and wherein a second signal of the y sensor is recorded as a function of the position of the rotor in the x direction; and
- calibrating the first x actuation unit and the second x actuation unit in a second calibration step by evaluating the variables evaluated in the first calibration step, with the second signal of the y sensor in order to compensate the residual rotational angle error of the second rotational angle when the rotor moves in the x direction.

**4.** Method according to Claim 3, **characterized in that** it also comprises the following steps:

- actuating the first x drive by means of the first x actuation unit which is calibrated in the second calibration step to move the rotor in the x direction, and actuating the second x drive by means of the second x actuation unit which is calibrated in the second calibration step to move the rotor in the x direction, wherein the first x drive is actuated in a positionally synchronous fashion with a third offset in the direction with respect to the second x drive, with the result that during the movement the rotor is rotated about a third rotational angle in a rotational axis which is arranged perpendicularly with respect to the movement plane, wherein owing to the lack of further calibration of the first x actuation unit and of the second x actuation unit the third rotational angle has a residual rotational angle error which is dependent on the position of the rotor in the x direction and as a result of which deflection of the y sensor in the y direction varies, and wherein a third signal of the y sensor is recorded as a function of the position of the rotor in the x direction; and
- calibrating the first x actuation unit and the second x actuation unit in a third calibration step by evaluating the variables, evaluated in the second calibration step, with the third signal of the y sensor in order to compensate the residual rotational angle error of the third rotational angle when the rotor moves in the x direction.

**5.** Method according to one of Claims 1 to 4, **characterized in that** the first x drive and the second x drive each have at least two force-transmitting elements which are spaced apart in the x direction and the distance between which in the x direction determines a period of the two x drives, wherein the first offset is half of the period.

**6.** Method according to one of Claims 1 to 5, **characterized in that** the stator has force-transmitting elements which are arranged periodically in the x direction and the distance between which determines a period of the two x drives, wherein the first offset is half of the period.

7. Method according to Claim 3 or a claim referred back thereto, **characterized in that** the second offset is a quarter of the period.

8. Method according to one of Claims 1 to 7, **characterized in that**:

- the first x actuation unit comprises a first x sensor which is arranged on the rotor and has the purpose of determining the position of the rotor with respect to the stator in the x direction, wherein the first x actuation unit is designed to regulate the position of the rotor in the x direction;
- the second x actuation unit comprises a second x sensor which is arranged on the rotor and has the purpose of determining the position of the rotor with respect to the stator in the x direction, wherein the first x sensor is arranged offset in the y direction with respect to the second x sensor, and wherein the second x actuation unit is designed to regulate the position of the rotor in the x direction; and
- the first x actuation unit and the second x actuation unit are calibrated in the first calibration step in such a way that the signal of the first x sensor and the signal of the second x sensor are evaluated to the same degree with the first signal of the y sensor.

9. Method according to Claim 8, **characterized in that**:

- the y drive forms a first y drive, and the planar drive also comprises a second y drive which is arranged on the rotor, has the purpose of driving the rotor in the y direction and is arranged spaced apart from the first y drive in the movement plane; and
- **in that** the planar drive also comprises a y actuation unit for actuating the first y drive and the second y drive;

wherein the method also comprises the following steps:

- actuating the first y drive and the second y drive by means of the un-calibrated y actuation unit to move the rotor in the y direction, wherein the first y drive is actuated in a positionally synchronous fashion with a first y offset in the y direction with respect to the second y drive, with the result that during the movement the rotor is rotated about a first further rotational angle in a further rotational axis which is arranged perpendicularly with respect to the movement plane, wherein owing to the lack of calibration of the y actuation unit the first further rotational angle has a residual rotational angel error which is dependent on the position of the rotor in the y direction and as a result of which deflection of the two x sensors in the x direction varies, and wherein a signal of at least one of the two x sensors of the calibrated x actuation units is recorded as a function of the position of the rotor in the y direction; and
- calibrating the y actuation unit in a first further calibration step by evaluating a variable which is to be processed in the y actuation unit, with the recorded signal of the at least one of the two x sensors in order to compensate the residual rotational angle error of the first further rotational angle during the movement in the y direction.

10. Planar drive comprising:

- a stator;
- a rotor which can move with respect to the stator in an x direction and in a y direction, wherein the x direction and the y direction span a movement plane of the rotor;
- a first x drive, arranged on the rotor, for driving the rotor in the x direction,
- a first x actuation unit;
- a second x drive for driving the rotor in the x direction, wherein the second x drive is arranged on the rotor, offset in the y direction with respect to the first x drive;
- a second x actuation unit;
- a y drive for driving the rotor in the y direction; and
- a y sensor for determining the position of the rotor with respect to the stator in the y direction, wherein the y sensor is arranged on the rotor spaced apart from the y drive in the movement plane;

**characterized in that**
at least the first x actuation unit and the second x actuation unit are configured to carry out the method according to one of Claims 1 to 9.

**Revendications**

1. Procédé d'étalonnage d'un entraînement planaire qui comprend un stator et un rotor déplaçable par rapport au stator dans une direction x et dans une direction y, dans lequel la direction x et la direction y définissent un plan de mouvement du rotor, et dans lequel l'entraînement planaire comprend les autres composants suivants :

   - un premier entraînement x disposé sur le rotor pour entraîner le rotor dans la direction x ;
   - une première unité de commande x ;
   - un deuxième entraînement x pour entraîner le rotor dans la direction x, dans lequel le deuxième entraînement x est disposé sur le rotor en étant décalé dans la direction y par rapport au premier entraînement x ;
   - une deuxième unité de commande x ;
   - un entraînement y destiné à entraîner le rotor dans la direction y ; et
   - un capteur y destiné à déterminer la position du rotor par rapport au stator dans la direction y, dans lequel le capteur y est disposé sur le rotor en étant espacé par rapport à l'entraînement y dans le plan de mouvement, dans la direction x ;

   **caractérisé en ce que** le procédé comprend les étapes suivantes :

   - commander le premier entraînement x par l'intermédiaire de la première unité de commande x pour déplacer le rotor dans la direction x et commander le deuxième entraînement x par l'intermédiaire de la deuxième unité de commande x pour déplacer le rotor dans la direction x, dans lequel le premier entraînement x est commandé de manière localement synchrone avec un premier décalage dans la direction x par rapport au deuxième entraînement x et dans lequel un premier signal du capteur y est enregistré en fonction de la position du rotor dans la position x ; et
   - étalonner la première unité de commande x et la deuxième unité de commande x lors d'une première étape d'étalonnage en évaluant une grandeur devant être traitée dans la première unité de commande x et une grandeur devant être traitée dans la deuxième unité de commande x avec le premier signal du capteur y.

2. Procédé selon la revendication 1, **caractérisé en ce qu'**il comprend en outre les étapes suivantes, qui doivent être exécutées avant la première étape d'étalonnage :

   - commander le premier entraînement x par l'intermédiaire de la première unité de commande x non étalonnée pour déplacer le rotor dans la direction x et commander le deuxième entraînement x par l'intermédiaire de la deuxième unité de commande x non étalonnée pour déplacer le rotor dans la direction x, dans lequel la commande effectuée par l'intermédiaire de la première unité de commande x non étalonnée et la commande effectuée par l'intermédiaire de la deuxième unité de commande x non étalonnée s'effectuent de manière localement synchrone, et dans lequel un signal du capteur y prévu pour un pré-étalonnage est enregistré en fonction de la position du rotor dans la direction x ; et
   - pré-étalonner la première unité de commande x et la deuxième unité de commande x en évaluant la grandeur non encore évaluée lors de la première étape d'étalonnage et devant être traitée dans la première unité de commande x et la grandeur non encore évaluée lors de la première étape d'étalonnage et devant être traitée dans la deuxième unité de commande x avec le signal du capteur y enregistré et prévu pour le pré-étalonnage.

3. Procédé selon la revendication 1 ou 2, **caractérisé en ce qu'**il comprend en outre les étapes suivantes :

   - commander le premier entraînement x par l'intermédiaire de la première unité de commande x étalonnée lors de la première étape d'étalonnage pour déplacer le rotor dans la direction x et commander le deuxième entraînement x par l'intermédiaire de la deuxième unité de commande x étalonnée lors de la première étape d'étalonnage pour déplacer le rotor dans la direction x, dans lequel le premier entraînement x est commandé de manière localement synchrone avec un deuxième décalage dans la direction x par rapport au deuxième entraînement x de manière à ce que le rotor soit mis en rotation d'un deuxième angle de rotation pendant le déplacement suivant un axe de rotation disposé perpendiculairement au plan de mouvement, dans lequel le deuxième angle de rotation présente une erreur d'angle de rotation résiduelle dépendant de la position du rotor dans la direction x du fait de l'absence d'autre étalonnage de la première unité de commande x et de la deuxième unité de commande x, de sorte qu'une déviation du capteur y dans la direction y varie, et dans lequel un deuxième signal du capteur y est enregistré dans la direction x en fonction de la position du rotor ; et
   - étalonner la première unité de commande x et la deuxième unité de commande x lors d'une deuxième étape d'étalonnage en évaluant les grandeurs évaluées lors de la première étape d'étalonnage avec le deuxième signal du capteur y afin d'égaliser l'erreur d'angle de rotation résiduelle du deuxième angle de rotation lors du déplacement du rotor dans la direction x.

4. Procédé selon la revendication 3, **caractérisé en ce qu'**il comprend en outre les étapes suivantes :

- commander le premier entraînement x par l'intermédiaire de la première unité de commande x étalonnée lors de la deuxième étape d'étalonnage pour déplacer le rotor dans la direction x et commander le deuxième entraînement x par l'intermédiaire de la deuxième unité de commande x étalonnée lors de la deuxième étape d'étalonnage pour déplacer le rotor dans la direction x, dans lequel le premier entraînement x est commandé de manière localement synchrone avec un troisième décalage dans la direction x par rapport au deuxième entraînement x de manière à ce que le rotor soit mis en rotation d'un troisième angle de rotation pendant le déplacement suivant un axe de rotation disposé perpendiculairement au plan de mouvement, dans lequel le troisième angle de rotation présente une erreur d'angle de rotation résiduelle dépendant de la position du rotor dans la direction x du fait de l'absence d'autre étalonnage de la première unité de commande x et de la deuxième unité de commande x, de sorte qu'une déviation du capteur y dans la direction y varie, et dans lequel un troisième signal du capteur y est enregistré en fonction de la position du rotor dans la direction x ; et
- étalonner la première unité de commande x et la deuxième unité de commande x lors d'une troisième étape d'étalonnage en évaluant les grandeurs évaluées lors de la deuxième étape d'étalonnage avec le troisième signal du capteur y afin d'égaliser l'erreur d'angle de rotation résiduelle du troisième angle de rotation lors du déplacement du rotor dans la direction x.

5. Procédé selon l'une quelconque des revendications 1 à 4, **caractérisé en ce que** le premier entraînement x et le deuxième entraînement x comprennent respectivement au moins deux éléments de transmission de force espacés dans la direction x, dont la distance dans la direction x détermine une période des deux entraînements x, dans lequel le premier décalage est égal à la moitié de la période.

6. Procédé selon l'une quelconque des revendications 1 à 5, **caractérisé en ce que** le stator comprend des éléments de transmission de force disposés périodiquement dans la direction x, dont la distance détermine une période des deux entraînements x, dans lequel le premier décalage est égal à la moitié de la période.

7. Procédé selon la revendication 3 ou une revendication dépendant de celle-ci, **caractérisé en ce que** le deuxième décalage est égal à un quart de la période.

8. Procédé selon l'une quelconque des revendications 1 à 7, **caractérisé en ce que** :

- la première unité de commande x comprend un premier capteur x disposé sur le rotor pour déterminer la position du rotor par rapport au stator dans la direction x, dans lequel la première unité de commande x est conçue pour commander la position du rotor dans la direction x ;
- la deuxième unité de commande x comprend un deuxième capteur x disposé sur le rotor pour déterminer la position du rotor par rapport au stator dans la direction x, dans lequel le premier capteur x est disposé de manière décalée par rapport au deuxième capteur x dans la direction y et dans lequel la deuxième unité de commande x est conçue pour commander la position du rotor dans la direction x ; et
- l'étalonnage de la première unité de commande x et de la deuxième unité de commande x s'effectue lors de la première étape d'étalonnage de manière à ce que le signal du premier capteur x et le signal du deuxième capteur x soient évalués de manière identique avec le premier signal du capteur y.

9. Procédé selon la revendication 8, **caractérisé en ce que** :

- l'entraînement y forme un premier entraînement y et l'entraînement planaire comprend en outre un deuxième entraînement y disposé sur le rotor pour entraîner le rotor dans la direction y, lequel le deuxième entraînement y est disposé de manière espacée par rapport au premier entraînement y dans le plan de mouvement ; et
- **en ce que** l'entraînement planaire comprend en outre une unité d'entraînement y destinée à commander le premier entraînement y et le deuxième entraînement y ; dans lequel le procédé comprend en outre les étapes suivantes :
- commander le premier entraînement y et le deuxième entraînement y par l'intermédiaire de l'unité de commande y non étalonnée pour déplacer le rotor dans la direction y, dans lequel le premier entraînement y est commandé de manière localement synchrone avec un premier décalage y dans la direction y par rapport au deuxième entraînement y, de manière à ce que le rotor soit mis en rotation d'un premier autre angle de rotation pendant le déplacement suivant un autre axe de rotation disposé perpendiculairement au plan de mouvement, dans lequel le premier autre angle de rotation présente une erreur d'angle de rotation résiduelle dépendant de la position du rotor dans la direction y du fait de l'absence d'étalonnage de l'unité de commande y, de sorte qu'une déviation des deux capteurs x varie dans la direction x, et dans lequel un signal d'au moins l'un des deux capteurs x des unités de commande x étalonnées est enregistré en fonction de la position du rotor dans la direction y ; et

- étalonner l'unité de commande y lors d'une première autre étape d'étalonnage en évaluant une grandeur devant être traitée dans l'unité de commande y avec le signal enregistré de l'au moins un des deux capteurs x afin d'égaliser l'erreur d'angle de rotation résiduelle du premier autre angle de rotation lors du déplacement dans la direction y.

**10.** Entraînement planaire, comprenant :

- un stator ;
- un rotor déplaçable par rapport au stator dans une direction x et dans une direction y, dans lequel la direction x et la direction y définissent un plan de mouvement du rotor ;
- un premier entraînement x disposé sur le rotor pour entraîner le rotor dans la direction x ;
- une première unité de commande x ;
- un deuxième entraînement x pour entraîner le rotor dans la direction x, dans lequel le deuxième entraînement x est disposé sur le rotor en étant décalé dans la direction y par rapport au premier entraînement x ;
- une deuxième unité de commande x ;
- un entraînement y pour entraîner le rotor dans la direction y ; et
- un capteur y pour déterminer la position du rotor par rapport au stator dans la direction y, dans lequel le capteur y est disposé sur le rotor en étant espacé par rapport au entraînement y dans le plan de mouvement ; **caractérisé en ce qu'**au moins la première unité de commande x et la deuxième unité de commande x sont configurées pour mettre en oeuvre le procédé selon l'une quelconque des revendications 1 à 9.

Fig. 1

**EP 2 812 655 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10329931 A1
- DE 102006024150 A1
- WO 2011064317 A2
- US 20080275661 A1
- JP 2011193620 A